(19) Europäisches Patentamt
European Patent Office
Office européen des brevets

(11) EP 3 713 984 B1

(12) **EUROPÄISCHE PATENTSCHRIFT**

(45) Veröffentlichungstag und Bekanntmachung des Hinweises auf die Patenterteilung:
**01.11.2023 Patentblatt 2023/44**

(21) Anmeldenummer: **18807987.5**

(22) Anmeldetag: **23.11.2018**

(51) Internationale Patentklassifikation (IPC):
***C08G 59/16*** *(2006.01)* ***C08G 59/18*** *(2006.01)*
***C08G 59/40*** *(2006.01)* ***C08G 59/42*** *(2006.01)*
***C08G 59/50*** *(2006.01)* ***C08K 5/00*** *(2006.01)*
***C08K 5/17*** *(2006.01)* ***C08K 5/3445*** *(2006.01)*
***C09J 163/00*** *(2006.01)* ***C08L 9/02*** *(2006.01)*
***C08L 63/00*** *(2006.01)* ***C09J 7/35*** *(2018.01)*
***C09J 7/10*** *(2018.01)*

(52) Gemeinsame Patentklassifikation (CPC):
(C-Sets verfügbar)
**B29B 7/7495; B29B 7/485; B29B 7/487; B29B 7/60; B29B 7/603; B29B 7/726; B29B 7/728; B29B 7/845; B29B 7/90; C08G 59/1472; C08G 59/182; C08G 59/184; C08G 59/4021; C08G 59/4035; C08G 59/42;** (Forts.)

(86) Internationale Anmeldenummer:
**PCT/EP2018/082358**

(87) Internationale Veröffentlichungsnummer:
**WO 2019/101914 (31.05.2019 Gazette 2019/22)**

(54) **KLEBEBÄNDER AUF BASIS VON EPOXIDHARZ-REAKTIVKLEBSTOFFEN**

ADHESIVE TAPES BASED ON EPOXY RESIN REACTIVE ADHESIVES

RUBANS ADHÉSIFS À BASE D'ADHÉSIFS RÉACTIFS EN RÉSINE ÉPOXYDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.11.2017 DE 102017221072**

(43) Veröffentlichungstag der Anmeldung:
**30.09.2020 Patentblatt 2020/40**

(73) Patentinhaber: **TESA SE**
**22848 Norderstedt (DE)**

(72) Erfinder:
- **SCHUH, Christian**
  **22767 Hamburg (DE)**
- **KIRPICENOK, Olga**
  **25474 Ellerbek (DE)**

(74) Vertreter: **tesa SE**
**Hugo-Kirchberg-Straße 1**
**22848 Norderstedt (DE)**

(56) Entgegenhaltungen:
**WO-A1-2014/201369 JP-A- S5 221 100**
**US-A1- 2016 326 413**

EP 3 713 984 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)
**C08G 59/50; C08G 59/5073; C08L 63/00; C09J 163/00;** B29C 48/022; B29C 48/44; B29C 48/82; B29C 48/85

C-Sets
**C08L 9/02, C08L 63/00**

## Beschreibung

Die vorliegende Erfindung betrifft Klebebänder mit zumindest einer Schicht einer haftklebrigen Klebemasse, wobei die Klebemasse eine polymere Filmbildner-Matrix sowie eine härtbare Zusammensetzung umfasst, und wobei die härtbare Zusammensetzung zumindest ein Epoxidharz sowie zumindest ein Härtungsreagenz für das Epoxidharz umfasst.

Zur Erzielung hoher Verklebungsfestigkeiten, die in der Regel deutlich über denen einfacher Haftklebstoffe liegen, werden bevorzugt Reaktivklebstoffe (auch als Reaktionsklebstoffe bezeichnet) eingesetzt, die aus zwei Komponenten besteht, nämlich in der Regel einer reaktiven Komponenten - wie einem Reaktivharz - und einer Härterkomponente, die mit dem Reaktivharz unter geeigneten Bedingungen reagieren kann und dabei zu einer Aushärtung des Reaktivklebers führt. Aufgrund guter Benetzung der Substrate vor der Aushärtung kommt es durch die Aushärtung zu sehr hohen Adhäsionskräften, und bei der Härtung ebenfalls zu einer hohen Kohäsion des ausgehärteten Klebstoffs, so dass sehr gute Verklebungsfestigkeiten realisiert werden können. In diesem Zusammenhang wird auch von "strukturellem Verkleben" gesprochen.

Zum strukturellen Verkleben von Bauteilen, d.h. zum Verkleben mit sehr hohen (> 10 MPa) Klebkräften, wie beispielsweise im Automobilbau werden Flüssigkleber zumeist auf Epoxidbasis verwendet. Diese werden über komplex gesteuerte Dosiermaschinen aufgetragen und verfügen über keine initiale Verklebungsfestigkeit, so dass die Bauteile über den Aushärtungszeitraum in Position gehalten werden müssen. Es gibt einige wenige Systeme, die über in sich haftklebrige Acrylate erhalten werden, jedoch ihre Haftklebrigkeit verlieren, wenn der Epoxidanteil größer 50% wird. Besonders hohe Scherfestigkeiten werden jedoch mit möglichst hohen Epoxidanteilen erzielt. Ein höherer Anteil an Epoxid und somit eine bessere Klebkraft gehen somit immer zu Lasten der Haftklebrigkeit. Wünschenswert sind solche Klebemassen, die die positiven Eigenschaften eines hohen Epoxidanteils und hoher Haftklebrigkeit vereinen. Für eine besonders einfache Applikation sind insbesondere Klebebänder bevorzugt.

Im Stand der Technik sind verschiedene Ansätze erkennbar, einen hohen Epoxidanteil bei gleichzeitiger Haftklebrigkeit zu verwirklichen:
In der DE 10 2004 031 188 A1 werden Klebemassen offenbart, die zumindest aus a) einem säure- oder säureanhydridmodifizierten Vinylaromatenblockcopolymer und b) einer epoxidhaltigen Verbindung bestehen. Durch die chemische Vernetzung der Harze mit den Elastomeren werden sehr große Festigkeiten innerhalb des Klebefilms erreicht. Um die Adhäsion zu erhöhen, ist auch der Zusatz von mit dem Elastomerblock der Blockcopolymere verträglichen Klebharzen möglich. Die säure- beziehungsweise säureanhydridmodifizierten Elastomere und Epoxidharze werden in einem Mengenverhältnis eingesetzt, so dass der molare Anteil an Epoxidgruppen und Anhydridgruppen gerade äquivalent ist. Bei der Verwendung der gängigen, nur gering modifizierten Elastomere und dem Einsatz niedermolekularer Epoxidharze mit einem niedrigen Epoxidäquivalent ergeben sich dabei nur sehr geringe Mengen - von unter 10 Gew.-% bezogen auf das modifizierte Styrolblockcopolymer - an Epoxidharz, die eingesetzt werden. Im Wesentlichen wirkt so das Epoxidharz als Vernetzungsagens für die modifizierten Elastomere.

US 6,294,270 B, US 6,423,367 B und US 6,489,042 B beschreiben vernetzbare Mischungen aus epoxidierten Vinylaromatenblockcopolymeren und Epoxidharzen unter anderem auch als Klebemasse für die Verklebung zweier elektronischer Bauteile. Hauptsächlich ist eine Vernetzung durch Bestrahlung mit UV-Licht beschrieben. Für diesen Zweck hat sich hier ein sehr hoher Anteil von über 90 Gew.-% des epoxidierten Vinylaromatenblockcopolymers als beste Lösung erwiesen. Im Wesentlichen wirkt auch hier das Epoxidharz als Vernetzungsagens für die modifizierten Elastomere. Aus diesen vier vorgenannten Schriften geht hervor, dass es sich jeweils um einen homogenen Blend von Reaktivharz und modifiziertem Blockcopolymer handeln muss, der sich durch eine gute Verträglichkeit dieser zumindest zwei Komponenten auszeichnet, so dass das Epoxidharz auch nach der Vernetzung molekular dispergiert in der Elastomerphase vorliegt. Da das Epoxidharz als Vernetzungsagens wirkt, kann es zu keiner Ausbildung von vernetzten Epoxidphasen kommen. In ihrer Funktion als Vernetzungsagentien werden Epoxide mit maximal 10% in Haftklebesystemen eingesetzt.

In der DE 10 2011 105 209 A1 wird ein haftklebriges Klebeband für strukturelle Verklebungen beschrieben. Im dort beschriebenen Stand der Technik wird explizit darauf hingewiesen, dass kein haftklebriges System bekannt ist, welches unter Einwirkung von hoher Temperatur eine falten- und blasenfreie strukturelle Verklebung ermöglicht. Vor allen Dingen wird darauf hingewiesen, dass aus lösungsmittelbasierten Haftklebstoffen keine blasen- und kanalfreien

Produkte entstanden. Gelöst wurde das Problem über ein reaktives Dickschichtpolymerisat, welches neben radikalisch polymerisierbaren Acrylaten auch 5-15% festes Bisphenol-A Epoxid enthält und mittels UV-Licht soweit vernetzt wird, dass ein leicht haftklebriges Band erhalten wird.

Hieraus ergibt sich, dass für haftklebrige Systeme in sich haftklebrige Elastomere auf Acrylatbasis benötigt werden und dass diese mit bis zu 15% Epoxid vernetzt werden können.

In der EP 1 028 151 B1 ist ein Epoxidhaftkleber auf Acrylatbasis beschrieben, der über Maleinsäureanhydrid-Copolyacrylate einerseits haftklebrig gestaltet wird, wobei sich andererseits der Epoxidanteil überraschenderweise auf bis zu 50% steigern lässt. Dabei wird dargelegt, dass die Scherfestigkeit nach Aushärtung mit der Menge an Epoxid

steigt, jedoch die Haftklebrigkeit verloren geht. Durch die Verwendung von Maleinsäureanhydrid-Copolyacrylaten als Klebharz können allerdings Epoxidanteile von bis zu 50% erreicht werden, wobei bevorzugt aber 20 - 40 Gew.-% eingesetzt werden, in den Beispielen werden maximal 25 Gew.-% eingesetzt.

In der EP 0 386 909 A1 wird ein durch UV-Strahlung herstellbares Prepolymerisat auf Copolyacrylatbasis beschrieben, das mit einem latenten Härter und einem phenolischen Epoxidharz gemischt wird und nach Beschichtung auf einem bahnförmigen Trägermaterial durch UV-Strahlung weiterpolymerisiert wird. Der Haftklebstoff ist thermisch nachvernetzbar, wobei die in der Copolyacrylatmatrix vorhandenen Epoxidharz- und Härteranteile miteinander reagieren. Auch werden wieder Acrylate benötigt, um haftklebrige thermisch nachhärtbare Epoxidklebebänder herzustellen. Beansprucht werden dabei zwar bis zu 60 % Epoxidharz, in den erfindungsgemäßen Beispielen werden jedoch nur < 51 % realisiert.

Darüber hinaus ist es aus dem J. Appl. Polym. Sci. 41, 467- 1990 - "Rubber-Modified Epoxides" bekannt, Epoxidharzklebstoffen Elastomere zuzusetzen. Ein gängiges Verfahren zur Erzeugung zweiphasiger Morphologien zum Beispiel in Epoxidharzklebstoffen ist der Zusatz eines endgruppenmodifizierten, epoxid reaktiven Polybutadien-Co-Acrylnitril-Copolymers zum ungehärteten Epoxidharz. Dabei muss das thermoplastische Polymer im ungehärteten Epoxidharz löslich werden, im Verlauf der Härtungsreaktion jedoch mit dem Epoxidharz-Polymer unverträglich sein, so dass es während der Härtung zur Phasenseparation kommt. Mit Erreichen des Gelpunktes wird der Phasenseparationsprozess gestoppt, so dass das thermoplastische beziehungsweise elastomere Polymer in Form von mikroskopischen sphärischen Domänen in der Epoxidharzmatrix vorliegt. Bei dem Zusatz von Elastomeren zu einem Epoxidharz kommt es also zur Ausbildung einer dispersen Elastomerphase in der Epoxidmatrix.

In der EP 0 927 737 A1 wird die Zugabe von hochschmelzenden Elastomerpartikeln (z.B. Nylon) und carboxyterminiertem Nitrilkautschuk in Epoxidklebstoffe beschrieben. Es wird gezeigt, dass diese auch im ausgehärteten Tape als phasenseparierte Partikel von ~3$\mu$m Größe in der Epoxidmatrix vorliegen. Danach ist die Zugabe von Elastomerenpartikeln und Nitrilkautschuk vorteilhaft, wenn diese nach dem Härten als disperse Phase vorliegen. Ferner erzeugen feste Bisphenol A Epoxide niedrigere Vernetzungsdichten als ihre flüssigen Derivate. Solche sogenannten "Prepregs" ("preimpregnated fibres") sind auch "self-adhesive" und "tacky", aber per Definition bestehen solche Prepregs aus in Epoxid getränkten Geweben, die dem Epoxidharz eine gewisse Kohäsion geben.

Weiterhin bekannt sind mit Flüssigharz imprägnierte Flächengebilde, wie z.B. Prepregs, zur Herstellung von Leiterplatten oder Bauteilen aus Faserverbundkunststoffen. Es handelt sich dabei um textile Flächengebilde, die mit einem Reaktivharz imprägniert sind. Zur Herstellung der Lager- und Transportfähigkeit werden die Reaktivharze in der Regel angeliert, d.h. die Härtungsreaktion wird initiiert und in einem frühen Stadium gestoppt (sog. B-Zustand). Dabei tritt eine deutliche Viskositätserhöhung des Harzes auf, was das imprägnierte Gebilde handhabbar macht. Prepregs dieser Art sind haftklebrig und können somit bei Raumtemperatur zusammenlaminiert werden. Wie Klebebänder werden sie in der Regel mit Release-Linern eingedeckt, um sie stapelbar oder aufwickelbar zu gestalten. Nachteilig an diesem Stand der Technik ist, dass die angelierten Prepregs gekühlt gelagert werden müssen, um ein Weiterlaufen der Härtungsreaktion zu verhindern. Die Viskositätserhöhung vermindert zudem die Benetzungsfähigkeit der Substratoberfläche bei einer Verklebung. In der JP 1991282820A sowie in der US 4,859,533 sind mit Poly-urethan bzw. Polyvinylformal schlagzähmodifizierte Prepregs beschrieben.

Polyurethane werden in Epoxidmischungen im Übrigen eingesetzt, um eine möglichst geringe Haftklebrigkeit zu erzielen. Dies ist z.B. in der DE 10 2008 053 520 A1 beschrieben. Auch die in der WO 2009 09814 A1 beschriebene Zusammensetzung aus vernetztem Polyurethan mit maximal 50 Gew.-% Epoxid führt zu einer nicht haftklebrigen Klebemasse.

Im vorgenannten Stand der Technik werden für strukturelle Verklebungen somit nahezu ausschließlich flüssige Epoxid- oder Urethanklebstoffe eingesetzt. Diese werden meist mit Schlagzähmodifikatoren bestehend aus Elastomeren und/oder Thermoplasten abgemischt, sodass sich eine disperse Elastomer/Thermoplast-Phase bildet. Diese Systeme sind nicht haftklebrig. Abgesehen von Prepregs, in denen die Gewebe dem Epoxidharz eine gewisse Kohäsion verleihen, sind haftklebrige Systeme für strukturelle Verklebungen in dem vorgenannten Stand der Technik nur auf Basis von Acrylaten mit Epoxiden beschrieben. Die Acrylate enthalten meist Epoxidfunktionalitäten, sodass im Aushärtungsschritt das Acrylat über die Epoxidvernetzer gehärtet wird. Die Scherfestigkeit steigt mit dem Epoxidanteil, wodurch aber umgekehrt die Haftklebrigkeit nachlässt. Eine Bedingung für das Auftreten von Haftklebrigkeit ist eine gewisse Kohäsion. Diese wird über die haftklebrigen Acrylate bereitgestellt und geht ab bestimmten Mengen an flüssigem Epoxid stark zurück. Einen zentralen Nachteil im aktuellen Stand der Technik stellt der niedrige Epoxidgehalt dar, wodurch die zu erreichenden Scherfestigkeiten eingeschränkt werden.

Aus dem Stand der Technik ist es seit einiger Zeit bekannt, an sich flüssige, reaktive Zweikomponenten-Klebstoffe auch in Klebebandform anbieten zu können, indem der Zweikomponenten-Klebstoff räumlich in einer Filmbildner-Matrix eingebettet ist, die zur Ausbildung des raumbeständigen Klebefilms genutzt wird.

Als Reaktivklebstoff sind dabei unter anderem auch Epoxidharz-Härter-Zusammensetzungen bekannt. Klebebänder mit einer Filmbildnermatrix und mit solchen Reaktivsystemen werden in der DE 10 2015 217 860 A beschrieben, nämlich Klebebänder enthaltend eine Haftklebemasse mit mindestens einem Polymer als Filmbildner, optional einem

Klebharz, und mit mindestens einem Reaktivharz und mindestens einen Initiator und/oder Härter und/oder Beschleuniger. Der Reaktivharzanteil ist relativ hoch, er beträgt nämlich auf 100 Teile Filmbildner-Polymer und Klebharz mindestens 104 Teile an Reaktivharz. Das mindestens eine Polymer liegt im ungehärteten Zustand der Haftklebemasse als kontinuierliche Polymerphase vor und dient auf diese Weise als der genannte Filmbildner.

Wünschenswert ist es aber, derartigen Klebebändern eine erhöhte Lagerstabilität zukommen zu lassen, insbesondere auch bei schwierigen Lagerbedingungen (Wärme, Feuchtigkeit und dergleichen). Üblicherweise besteht nämlich zwischen der Herstellung von Klebebändern und der Applikation bei der Verklebung eine mehr oder weniger lange Transport- und Lagerdauer, die zu keiner wesentlichen Qualitätsverschlechterung des Klebeproduktes führen darf.

Ausgehend von den bekannten Flüssig-Reaktivklebern war es nicht zu erwarten, die bekannten Zweikomponenten-Systeme ohne weiteres als (haftklebrigen) Reaktivklebstoff für matrixgestützte Klebebänder einsetzen zu können oder nach den für Flüssigkleber bekannten Methoden zu modifizieren, da Herstellung und Verarbeitung von Klebebändern anderen Bedingungen unterliegt wie die Herstellung und Verarbeitung von Flüssigklebern.

Die Herstellung von Klebebändern erfolgt nach dem Stand der Technik durch verschiedene Verfahren. Zum einen können die Komponenten der Klebemasse - wie Basispolymere (gegebenenfalls auch Matrixpolymere), Abmischungen (so gegebenenfalls auch Reaktivkomponenten), Additive und dergleichen - in Lösung in einem Lösemittel vorgelegt werden und aus der Lösung beschichtet werden. Häufig wird hierzu direkt die Polymerisationslösung, in der die Basispolymere hergestellt wurden und die gegebenenfalls nachher mit den weiteren Komponenten versehen wurde, verwendet. Bei den Systemen, in denen Epoxidharze als Klebemassenkomponente verwendet werden, werden in der Regel polare Lösemittel eingesetzt.

Hieraus ergibt sich jedoch das Problem, dass bei Verwendung solcher Lösemittel auch die Epoxid-Härter gelöst werden und somit deren Wirkung in Hinsicht auf eine Langzeitstabilität der härtbaren Zusammensetzungen verloren geht. Liegen sowohl Epoxide als auch Härter gelöst vor, ist regelmäßig mit einem sofortigen Beginn der Aushärtung zu rechnen, was dem Gedanken eines lagerbaren Klebebandes entgegensteht.

In einer alternativen Prozessführung wird die Beschichtung der Klebemassen aus der Schmelze vorgenommen, insbesondere wenn besonders dicke Klebebänder erhalten werden sollen, die aus der Lösung nicht verfügbar sind. Diese Prozessführung wird auch als Hotmelt-Verarbeitung bezeichnet (nicht zu verwechseln mit dem Begriff "Hotmelt-Kleber", der häufig für Heißschmelzkleber verwendet wird, also solche Klebstoffe, die nach Applikation auf das zu verklebende Substrat beziehungsweise zwischen die miteinander zu verklebenden Substrate aufgeschmolzen werden und dadurch ihrer maximale Klebfestigkeit entwickeln).

Bei der Verarbeitung aus der Schmelze wird die Klebmasse üblicherweise in geeigneten Extrudern geknetet und vermischt, gegebenenfalls entgast und anschließend über eine Düse beschichtet. Das Aufschmelzen und die eingetragene Scherenergie führen zu sehr hohen Temperaturen im Prozess. Häufig müssen bestimmte Komponenten der Klebmasse, wie beispielsweise Elastomere, dabei aufgeschlossen werden, also durch innige Vermischung mit weiteren Komponenten (den Aufschlussmitteln) erst verarbeitbar gemacht werden. Bei solchen Prozessen kommt es regelmäßig zu besonders hohem Eintrag von Scherenergie.

Die Klebemassen sind dabei also regelmäßig recht drastischen Bedingungen ausgesetzt. Dies führt dazu, dass sich empfindliche Systeme - wie Reaktivkomponenten, zu denen auch die Härter für Epoxide gehören - solche Prozesse üblicherweise nicht überstehen. Daher lassen sich für den Fachmann die Komponenten der Reaktivsysteme von härtbaren Flüssigklebern in der Regel nicht auf lösemittelfrei zu verarbeitende Systeme übertragen.

Mit den aus dem Stand der Technik bekannten Systemen ergibt sich somit das Problem, bestimmte Härter beziehungsweise Härter-Beschleuniger-Systeme für härtbare Zusammensetzungen mit reaktiven Komponenten auf Epoxidbasis - nämlich solche Härter, die eine hohe Lagerstabilität der resultierenden härtbaren Zusammensetzungen gewährleisten - in beschichtbare Klebemassen, die zur Herstellung dicker Klebebänder geeignet sind, einzubringen, ohne dass diese Härter in ihrer Härtungswirkung und/oder ihrem Einfluss auf die Lagerstabilität negativ verändert oder gar zerstört werden.

Aufgabe der Erfindung ist es daher, ein haftklebriges Klebeband zur Verfügung zu stellen, das eine hohe Lagerstabilität aufweist. Das Klebeband soll auch in hohen Schichtdicken herstellbar sein.

Die Aufgabe konnte gelöst werden durch die Verwendung von Epoxy-Amin-Addukten bei der Herstellung von aushärtbaren Klebebändern, wobei die Epoxy-Amin-Addukte als Härter für Epoxidharze beziehungsweise als Beschleuniger für die Härtung von Epoxidharzen dienen. Überraschend überstehen diese Epoxy-Amin-Addukte die drastischen Bedingungen bei der Klebebandherstellung, ohne ihre guten Eigenschaften in Hinblick auf eine hohe Lagerstabilität zu verlieren.

Die Lehre der vorliebenden Erfindung bietet somit die besondere Möglichkeit, Reaktivklebemassen in Form dicker Klebebandschichten mit hoher Lagerstabilität zu erhalten.

Dementsprechend betrifft die Erfindung ein Klebeband umfassend zumindest eine Schicht einer haftklebrigen Klebemasse, wobei die Klebemasse eine polymere Filmbildner-Matrix sowie eine härtbare Zusammensetzung umfasst. Die härtbare Zusammensetzung umfasst ihrerseits zumindest ein Epoxidharz (im Folgenden auch als "Epoxidharz (E)" bezeichnet) sowie zumindest ein Härtungsreagenz für das Epoxidharz (E). Erfindungsgemäß enthält das Härtungsreagenz zumindest ein Epoxy-Amin-Addukt. Epoxy-Amin-Addukte sind erfindungsgemäß die Reaktionsprodukte aus zumindest einer Verbindung, die zumindest eine cyclische Ethergruppe im Molekül aufweisen, (im Folgenden auch als Verbindung A bezeichnet), und zumindest einer Aminverbindung (im folgenden auch als Verbindung B bezeichnet). Erfindungsgemäß liegt die Gesamtmenge der Epoxy-Amin-Addukte im Bereich von 1 bis 10 Gew.-Teilen, bezogen auf 100 Gew.-Teile des/der zu härtenden Epoxidharze(s), wenn das bzw. die Epoxy-Amin-Addukt(e) als Beschleuniger in Kombination mit Nicht-Epoxy-Amin-Addukten als Härter eingesetzt werden.

In einer vorteilhaften Vorgehensweise umfasst die Verbindung A zwei oder mehr cyclische Ethergruppen, ist also polyfunktionell.

Cyclische Ether sind Verbindungen, die eine oder mehrere Gruppen beinhalten, die eine Überbrückung einer oder mehrerer C-C-Bindungen durch die Gruppierung -O- darstellen (cyclische Ethergruppe; mit der Vorsilbe "Epoxy" zu bezeichnende Gruppen gemäß Definition der IUPAC, Regel C-212.2 und R-9.2.1.4) und somit einen Heterocyclus aus zwei oder mehreren Kohlenstoffatomen und einem Sauerstoffatom bilden.

Für die Verbindung A als cyclische Ethergruppen erfindungsgemäß besonders vorteilhaft genutzt werden Epoxidgruppen, also heterocyclische Dreiringe mit zwei Kohlenstoffatomen und einem Sauerstoffatom.

Besonders vorteilhaft werden als Verbindungen A polyfunktionelle Epoxidverbindungen genutzt, also solche Verbindungen, die zwei oder mehr Epoxidgruppen aufweisen (im Folgenden als Verbindung A' bezeichnet; wobei die Gruppe der Verbindungen A' eine Teilgruppe der Verbindungen A bildet und somit von dieser Gruppe mit umfasst ist).

Vorteilhaft können beispielsweise 5 bis 80 Gew.-Teile wenigstens der polymeren Filmbildner-Matrix und 20 bis 95 Gew.-Teile des einen Epoxidharzes (E) beziehungsweise der Summe an Epoxidharzen (E) eingesetzt werden, wenn sich die Gew.-Teile der Filmbildner-Matrix und der Epoxidharze (E) zu 100 ergänzen. Die bevorzugt einzusetzende Menge an Härtungsreagenz kann je nach eingesetzten Härtern und gegebenenfalls Beschleunigern variieren, siehe hierzu weiter unten.

Die Härtung der härtbaren Zusammensetzung erfolgt insbesondere über die Reaktion eines oder mehrerer Reaktivharze mit einem oder mehreren Härtern und ggf. Beschleunigern (den Komponenten des Härtungsreagenz). Die härtbare Zusammensetzung umfasst als Reaktivharz zumindest ein Epoxidharz (E), kann aber auch mehrere Epoxidharze (E) umfassen. Das eine Epoxidharz (E) beziehungsweise die mehreren Epoxidharze (E) können die einzigen Reaktivharze in der härtbaren Zusammensetzung sein, insbesondere also die einzigen Komponenten der härtbaren Zusammensetzung, die mit Härtern - gegebenenfalls nach entsprechender Aktivierung - zu einer Aushärtung der Zusammensetzung führen können. Grundsätzlich ist es aber auch möglich, dass neben dem Epoxidharz (E) beziehungsweise neben den Epoxidharzen (E) weitere Reaktivharze, die keine Epoxidharze sind, zugegen sind.

Als Epoxidharz(e) werden beispielsweise und vorteilhaft ein oder mehrere elastomermodifizierte, insbesondere nitrilkautschukmodifizierte, Epoxidharze und/oder ein oder mehrere silanmodifizierte Epoxidharze und/oder ein oder mehrere fettsäuremodifizierte Epoxidharze eingesetzt.

Reaktivharze sind vernetzbare Harze, nämlich funktionelle Gruppen umfassende, oligomere oder kurzkettig polymere Verbindungen, insbesondere mit einer zahlenmittleren Molmasse $M_n$ von nicht mehr als 10 000 g/mol; und zwar insbesondere solche mit mehreren funktionellen Gruppen im Makromolekül. Da es sich bei den Harzen um eine Verteilung von Makromolekülen unterschiedlicher Einzelmassen handelt, können die Reaktivharze Fraktionen enthalten, deren zahlenmittlere Molmasse deutlich höher liegt, zum Beispiel bis etwa 100 000 g/mol, dies gilt insbesondere für polymermodifizierte Reaktivharze, wie beispielsweise elastomermodifizierte Reaktivharze.

Reaktivharze unterscheiden sich von für Klebmassen, insbesondere für Haftklebemassen, häufig eingesetzten Klebharzen. Unter einem "Klebharz" wird entsprechend dem allgemeinen Fachmannverständnis ein oligomeres oder polymeres Harz verstanden, das lediglich die Adhäsion (den Tack, die Eigenklebrigkeit) der Haftklebemasse im Vergleich zu der keinen Klebharz enthaltenden, ansonsten aber identischen Haftklebemasse erhöht. Typischerweise enthalten Klebharze außer Doppelbindungen (im Fall der ungesättigten Harze) keine reaktiven Gruppen, da sich ihre Eigenschaften über die Lebensdauer des Haftklebstoffes nicht ändern sollen.

Die funktionellen Gruppen der Reaktivharze sind derart, dass sie unter geeigneten Bedingungen - insbesondere nach einer Aktivierung beispielsweise durch erhöhte Temperatur (thermische Energie) und/oder durch aktinische Strahlung (wie Licht, UV-Strahlung, Elektronenstrahlung usw.) und/oder durch Initiierung und/oder Katalyse durch weitere chemische Verbindungen, wie etwa Wasser (feuchtigkeitshärtende Systeme) - mit einem Härtungsreagenz zu einer Aushärtung der die Reaktivharze und das Härtungsreagenz umfassenden Zusammensetzung führen, insbesondere im Sinne einer Vernetzungsreaktion. Härtungsreagenzien können beispielswiese aus einem Härter oder aus einer Mischung mehrere Härter oder aus einer Mischung eines oder mehrerer Härter mit Beschleunigern gebildet werden.

Als Epoxidharze werden im Rahmen dieser Schrift Epoxid-Gruppen umfassende Reaktivharze, insbesondere solche mit mehr als einer Epoxid-Gruppe pro Molekül, bezeichnet, also solche Reaktivharze, bei denen die funktionellen Gruppen oder zumindest ein Teil der funktionellen Gruppen Epoxidgruppen sind. Die Umwandlung der Epoxidharze während der Härtungsreaktion der härtbaren Zusammensetzung erfolgt insbesondere über Polyadditionsreaktionen mit geeigneten Epoxid-Härtern beziehungsweise durch Polymerisation über die Epoxid-Gruppen. Je nach Wahl des Epoxid-Härters können auch beide Reaktionsmechanismen parallel stattfinden.

Als Härter bezeichnet wird im Rahmen dieser Schrift entsprechend DIN 55945: 1999-07 die - als Bindemittel wirkende(n) - chemische(n) Verbindung(en) bezeichnet, die den vernetzbaren Harzen zugesetzt wird (werden), um die Härtung (Vernetzung) der härtbaren Zusammensetzung, insbesondere in Form eines applizierten Films, zu bewirken. In den härtbaren Zusammensetzungen ist Härter dementsprechend die Bezeichnung für diejenige Komponente, die nach dem Vermischen mit den Reaktivharzen und entsprechender Aktivierung die chemische Vernetzung bewirkt.

Als Beschleuniger werden im Rahmen dieser Schrift solche chemischen Verbindungen bezeichnet, die bei Anwesenheit eines anderen Härters die Reaktionsgeschwindigkeit der Härtungsreaktion und/oder die Geschwindigkeit der Aktivierung der Härtung der Epoxidharze insbesondere im Sinne eines Synergismus erhöhen.

Die Listen zur Auswahl der als Härter beziehungsweise als Beschleuniger einsetzbaren Substanzen überschneiden sich dabei, wobei die einzelnen Vertreter auch gleichzeitig beide Funktionsweisen realisieren können, so dass der Übergang zwischen Härter und Beschleuniger in der Regel fließend ist. Weiterhin wirken häufig chemische Verbindungen, die im alleinigen Einsatz als Härter genutzt werden können, im Einsatz mit einem weiteren Härter als Beschleuniger. Härtungsreaktionen sind in der dynamischen Differenzkalometrie (DSC) grundsätzlich als Peak identifizierbar. Als Beschleuniger sind insbesondere solche Verbindungen zu verstehen, deren Zugabe den Härtungspeak eines bestimmten Härters zu niedrigeren Temperaturen verschiebt. Zusätzliche Härter sind hingegen insbesondere solche Verbindungen, die zu einem zweiten - im Wesentlichen isoliert vorliegenden, sich aber gegebenenfalls auch mit dem ersten Peak überlagernden - Peak einer Härtungsreaktion im DSC führen.

Mit dem Begriff Härtungsreagenz wird - im Unterschied zu den einzelnen Härtern und Beschleunigern - die Gesamtheit der eingesetzten Härter und gegebenenfalls Beschleuniger für die Härtungsreaktion mittels der korrespondieren reaktiven Komponente (dem beziehungsweise den entsprechenden Reaktivharz(en)) bezeichnet. Das Härtungsreagenz kann dementsprechend insbesondere aus einem oder aus mehreren Härtern oder aus einem oder mehreren Härtern in Gegenwart eines oder mehrerer Beschleuniger gebildet werden.

Als (Co-)Härter werden im Rahmen dieser Schrift die einzelnen Komponenten des Härtungsreagenz bezeichnet, die also dieses Härtungsreagenz in Summe bilden. Der Begriff (Co-)Härter steht also für einen jeweilig anwesenden Härter oder Beschleuniger.

Das Epoxy-Amin-Addukt dient dabei im alleinigen Einsatz - also als einzige Komponente des Härtungsreagenz - als Härter für die Härtungsreaktion der härtbaren Zusammensetzung. Wird es zusammen mit weiteren, als Härter und/oder Beschleuniger dienenden chemischen Verbindungen eingesetzt, kann es selbst als Härter oder als Beschleuniger für die Härtungsreaktion der härtbaren Zusammensetzung dienen.

Bei der weiteren Beschreibung von Komponenten, Verbindungen, Zusammensetzungen oder dergleichen, die im Rahmen der Lehre der vorliegenden Schrift einzeln oder zu mehreren eingesetzt werden können (z.B. eingeführt durch "zumindest ein Epoxidharz" oder "ein oder mehrere Epoxidharze"), soll im weiteren die Verwendung des Plurals die Einzahl umfassen (die Aussage "vorteilhafte Epoxidharze werden gewählt aus der Liste der Verbindungen X, Y, Z" beinhaltet somit auch die Offenbarung, dass bei Anwesenheit nur eines Epoxidharzes dieses vorteilhaft aus der genannten Liste gewählt sein kann). Umgekehrt soll die Verwendung des Singulars die Spezifizierung nicht auf den Fall beschränken, in der die Komponente nur einzeln eingesetzt wird (die Aussage "Beispiele des Epoxidharzes umfassen vorteilhaft die Verbindungen X, Y und Z" beinhaltet somit auch die Offenbarung, dass bei mehreren anwesenden Epoxidharzen alle - jeweils unabhängig voneinander - vorteilhaft aus diese Liste gewählt werden können). Sofern es im Besonderen auf Einzahl oder Plural konkret ankommt, ist dies an entsprechender Stelle angegeben.

## Klebeband

Bei der härtbaren Zusammensetzung des erfindungsgemäßen Klebebandes handelt es sich in bevorzugter Weise um einen Klebstoff, insbesondere einen Reaktivklebstoff, besonders bevorzugt um einen bei Raumtemperatur (23 °C) haftklebrigen Klebstoff beziehungsweise Reaktivklebstoff.

Klebstoffe sind (nach DIN EN 923: 2008-06) nichtmetallische Stoffe, die Fügeteile durch Flächenhaftung (Adhäsion) und innere Festigkeit (Kohäsion) verbinden. Klebstoffe können selbstklebrig sein und/oder erst durch bestimmte Aktivierung, etwa durch thermische Energie und/oder aktinische Strahlung ihre endgültige Klebkraft ausbilden. Reaktivklebstoffe (die vor Aktivierung selbstklebrig oder nichtklebrig sein können) umfassen chemisch reaktive Systeme, die durch Aktivierung zu einer Härtungsreaktion führen und besonders hohe Klebkräfte (insbesondere größer 1MPa) zu den Substraten, auf denen sie verklebt werden, ausbilden können.

Die Härtung beziehungsweise Verfestigung wird durch chemische Reaktion der Bausteine miteinander erreicht. Im Gegensatz zu Haftklebstoffen, die zur Kohäsionserhöhung regelmäßig auch vernetzt werden, aber auch nach der Vernetzung noch viskoelastische Eigenschaften aufweisen und insbesondere nach der Verklebung keine Verfestigung mehr erfahren, führt bei Reaktionsklebstoffen in der Regel erst die Härtung zu der eigentlichen Verklebung mit den gewünschten Klebkräften; der Klebstoff selbst ist nach der Härtung häufig duroplastisch oder weitgehend duroplastisch ("lackartig").

Mit dem Attribut "haftklebrig" - auch als Bestandteil von Substantiven wie etwa in Haftklebstoff - oder synonym

mit dem Attribut "selbstklebrig" - ebenfalls auch als Bestandteil von Substantiven - werden im Rahmen dieser Schrift solche Zusammensetzungen bezeichnet, die bereits unter relativ schwachem Andruck - sofern nicht anders angegeben, bei Raumtemperatur, also 23 °C - eine dauerhafte Verbindung mit dem Haftgrund erlauben und nach Gebrauch im Wesentlichen rückstandsfrei vom Haftgrund wieder abgelöst werden können. Haftklebstoffe werden bevorzugt in Form von Klebebändern eingesetzt. Im Sinne der vorliegenden Erfindung besitzt ein haftklebriges Klebeband eine Klebkraft im unausgehärteten Zustand von wenigstens 1 N/cm. Die Klebkraft wird hierbei auf Stahl analog ISO 29862:2007 (Methode 3) bei 23 °C und 50 % relativer Luftfeuchte bei einer Abzugsgeschwindigkeit von 300 mm/min und einem Abzugswinkel von 180° bestimmt. Als Verstärkungsfolie wird eine geätzte PET-Folie mit einer Dicke von 36 µm verwendet, wie sie von der Firma Coveme (Italien) erhältlich ist. Die Verklebung eines 2 cm breiten Messstreifens wird dabei mittels einer Anrollmaschine mit 4 kg bei einer Temperatur von 23 °C vorgenommen. Das Klebeband wird sofort nach der Applikation abgezogen. Der Messwert (in N/cm) ergab sich als Mittelwert aus drei Einzelmessungen.

Haftklebstoffe wirken somit bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit der Haftklebestoffe beruht auf ihren adhäsiven Eigenschaften und die Wiederablösbarkeit auf ihren kohäsiven Eigenschaften.

Haftklebrige Reaktivklebstoffe haben bei Raumtemperatur haftklebrige Eigenschaften (und sind in diesem Zustand insbesondere viskoelastisch), weisen aber bei und nach der Härtung das Verhalten von Reaktivklebstoffen auf.

Erfindungsgemäß wird die härtbare Zusammensetzung, insbesondere der Haftklebstoff, filmbeziehungsweise schichtförmig als Bestandteil eines Klebebandes verwendet.

Hierzu wird die härtbare Zusammensetzung, insbesondere der Haftklebstoff, als Schicht auf einen permanenten oder einen temporär vorliegenden Träger aufgebracht, insbesondere mit den dem Fachmann bekannten Beschichtungsverfahren. Die Beschichtung des bahnförmigen Materials erfolgt bevorzugt lösemittelfrei, beispielsweise mittels Düsenbeschichtung oder mit einem Mehrwalzenauftragswerk. Besonders effektiv und vorteilhaft kann dies mit einem 2- bis 5-Walzenauftragswerk erfolgen, beispielweise mit einem 4-Walzenauftragswerk erfolgen, so dass die Selbstklebemasse bei Durchgang durch ein oder mehrere Walzenspalte vor Übergabe auf das bahnförmige Material auf die gewünschte Dicke ausgeformt wird. Die Walzen des Auftragswerkes können dabei einzeln temperiert werden, beispielsweise auf Temperaturen von 20 °C bis 150 °C eingestellt werden.

Permanente Träger sind insbesondere dauerhafter Bestandteil von ein- oder doppelseitig klebender Klebebänder, bei denen eine beziehungsweise beide der außenliegenden Flächen des Klebebandes durch eine (Haft-)Klebstoffschicht gebildet wird. Die Klebstoffschichten können zur besseren Handhabbarkeit mit antiadhäsiven Trennschichten, wie etwa silikonisierten Papieren, abgedeckt sein, die zur Verklebung jeweils entfernt werden.

Der allgemeine Ausdruck "Klebeband" umfasst somit einerseits ein Trägermaterial, welches ein- oder beidseitig mit einer (Haft)klebemasse versehen ist und gegebenenfalls weitere, dazwischenliegende Schichten aufweisen kann.

Insbesondere umfasst der Ausdruck "Klebeband" im Sinne der vorliegenden Erfindung sogenannte "Transferklebebänder", das heißt Klebebänder ohne permanente Träger, insbesondere einschichtige Klebebänder ohne permanente Träger.

Solche erfindungsgemäßen Transferklebebänder sind vor der Applikation auf einen temporären Träger aufgebracht. Als temporäre Träger dienen dabei insbesondere flexible folienförmige Materialien (Kunststofffolien, Papiere oder dergleichen), die mit einer Trennschicht versehen sind (beispielsweise silikonisiert sind) und/oder anti-adhäsive Eigenschaften aufweisen (sogenannte Trennmaterialien, Liner oder Releaseliner).

Temporäre Träger dienen insbesondere dazu, einschichtige oder ansonsten nicht selbsttragende Klebebänder - die also insbesondere nur aus der (Haft-)Klebemassenschicht bestehen - handhabbar zu machen und zu schützen.

Der temporäre Träger ist leicht entfernbar und wird bei der Anwendung entfernt (in der Regel nach Aufbringung der freien Klebebandoberfläche auf das erste Substrat und vor Verklebung der anderen, zunächst abgedeckten Klebebandoberfläche auf dem zweiten Substrat), so dass die Klebemassenschicht als doppelseitig klebendes Klebeband genutzt werden kann. Erfindungsgemäße Transferklebebänder können vor der Applikation auch zwei temporäre Träger aufweisen, zwischen denen die Klebemasse als Schicht vorliegt. Zur Applikation wird dann regelmäßig zunächst ein Liner entfernt, die Klebemasse appliziert und dann der zweite Liner entfernt. Die Klebemasse kann so direkt zur Verbindung zweier Oberflächen verwendet werden. Derartige trägerlose Transferklebebänder sind erfindungsgemäß besonders bevorzugt. Mit einem solchen erfindungsgemäßen haft-klebrigen trägerlosen Transferklebeband wird eine in Positionierung und Dosierung sehr genaue Verklebung ermöglicht.

Es sind auch Klebebänder möglich, bei denen nicht mit zwei Linern, sondern mit einem einzigen doppelseitig trennend ausgerüstet Liner gearbeitet wird. Die Klebebandbahn ist dann an ihrer Oberseite mit der einen Seite eines doppelseitig trennend ausgerüsteten Liners abgedeckt, ihre Unterseite mit der Rückseite des doppelseitig trennend ausgerüsteten Liners, insbesondere einer benachbarten Windung auf einem Ballen oder einer Rolle.

Insbesondere unterscheiden sich Klebebänder also - unabhängig davon, ob sie einen Träger aufweisen oder trägerlos, also Transferklebebänder, sind - von Klebmassenschichten, die etwa als Flüssigkleber auf einem Substrat vorliegen, dadurch, dass die Klebebänder selbsttragend sind, also als eigenständiges Produkt gehandhabt werden

können. Hierzu weist die Klebmassenschicht eine hinreichende Kohäsion auf und/oder die Gesamtheit der das Klebeband bildenden Schichten insbesondere eine hinreichende Stabilität auf.

Klebebänder, die ein- oder beidseitig mit Klebstoffen beschichtet sind, werden am Ende des Herstellungsprozesses zumeist zu einer Rolle in Form einer archimedischen Spirale aufgewickelt oder kreuzgespult. Um bei doppelseitig klebenden Klebebändern zu verhindern, dass die Klebemassen miteinander in Kontakt kommen, oder um bei einseitig klebenden Klebebändern eine Verklebung der Klebemasse auf dem Träger zu verhindern, können die Klebebänder, sofern nicht bereits auf einem Liner vorliegend, vor dem Wickeln vorteilhaft ein- oder beidseitig mit einem Liner eingedeckt werden, der zusammen mit dem Klebeband aufgewickelt wird. Neben der Abdeckung von ein- oder doppelseitig klebenden Klebebändern werden Liner auch zur Eindeckung von reinen Klebemassen (Transfer-klebeband) und Klebebandabschnitten (z.B. Etiketten) eingesetzt. Diese Liner sorgen des Weiteren dafür, dass die Klebemasse vor der Anwendung nicht verschmutzt wird.

Filmbildner-Matrix

Das erfindungsgemäße Klebebandes umfasst eine polymere Filmbildner-Matrix, in der die härtbare Zusammensetzung, die zumindest ein Epoxidharz (E) sowie zumindest ein Härtungsreagenz für das Epoxidharz (E) umfasst, enthalten ist. Derartige Klebebänder umfassen somit einen Klebefilm, der grundsätzlich ausgebildet ist aus einer polymeren filmbildenden Matrix (im Rahmen dieser Schrift kurz als "Filmbildner-Matrix" bezeichnet) mit der darin eingebetteten härtbaren Zusammensetzung, die insbesondere als Reaktivklebstoff dient. Die Filmbildner-Matrix bildet dabei einen selbsttragenden dreidimensionalen Film aus (wobei die räumliche Ausdehnung in Dickenrichtung des Films in der Regel sehr viel kleiner ist als die räumlichen Ausdehnungen in Langs- und Querrichtung, also als in den zwei Raumrichtungen der Flächenausdehnung des Films; zur Bedeutung des Begriffs "Film" siehe hierzu auch weiter unten). In dieser Filmbildner-Matrix ist die härtbare Zusammensetzung, insbesondere der Reaktivklebstoff, bevorzugt im Wesentlichen räumlich gleichverteilt (homogen), insbesondere so dass der Reaktivklebstoff - der ohne die Matrix gegebenenfalls nicht selbsttragend wäre - im erfindungsgemäßen Klebefilm im wesentlichen die gleiche (makroskopische) Raumverteilung einnimmt wie die Filmbildner-Matrix.

Aufgabe dieser Matrix ist es, ein inertes Grundgerüst für die reaktiven Monomere und/oder Reaktivharze zu bilden, so dass diese in einem Film oder einer Folie eingelagert sind. Somit können auch ansonsten flüssige Systeme in Filmform angeboten werden. Auf diese Art und Weise wird eine einfachere Handhabung gewährleistet. Die der Filmbildner-Matrix zugrunde liegenden Polymere sind dabei durch hinreichende Wechselwirkungen der Makromoleküle untereinander in der Lage, einen selbsttragenden Film ausbilden zu können, beispielsweise - ohne sich hierdurch im Erfindungsgedanken unnötig beschränken zu wollen - durch Ausbildung eines Netzwerks aufgrund physikalischer und/oder chemischer Vernetzung.

Inert bedeutet in diesem Zusammenhang, dass die reaktiven Monomere und/oder Reaktivharze unter geeignet gewählten Bedingungen (z. B. bei ausreichend geringen Temperaturen) im Wesentlichen nicht mit der polymeren Filmbildner-Matrix reagieren.

Als geeignete Filmbildner-Matrices zur Verwendung in der vorliegenden Erfindung werden vorzugsweise ein thermoplastisches Homopolymer oder ein thermoplastisches Copolymer eingesetzt (im Rahmen dieser Schrift zusammenfassend als "Polymere" bezeichnet), oder ein Blend aus thermoplastischen Homopolymeren oder aus thermoplastischen Copolymeren oder aus einem oder mehreren thermoplastischen Homopolymeren mit einem oder mehreren thermoplastischen Copolymeren. In einer bevorzugten Vorgehensweise werden ganz oder teilweise semikristalline thermoplastische Polymere eingesetzt.

Als thermoplastische Polymere können grundsätzlich beispielsweise Polyester, Copolyester, Polyamide, Copolyamide, Polyacrylsäureester, Acrylsäureester-Copolymere, Polymethacrylsäureester, Methacrylsäureester-Copolymere, thermoplastische Polyurethane sowie chemisch oder physikalisch vernetzte Stoffe der zuvor genannten Verbindungen gewählt werden. Die genannten Polymere können jeweils als einzig eingesetztes Polymer oder als Komponente eines Blends verwendet werden.

Weiterhin sind auch Elastomere und - als Vertreter der bereits genannten thermoplastischen Polymere - thermoplastische Elastomere alleinig oder im Gemisch als polymere Filmbildner-Matrix denkbar. Bevorzugt werden thermoplastische Elastomere, insbesondere semikristalline. Die genannten - insbesondere thermoplastischen - Elastomere können jeweils als einzig eingesetztes Polymer oder als Komponente eines Blends, beispielsweise mit weiteren Elastomeren und/oder thermoplastischen Elastomeren und/oder anderen thermoplastischen Polymeren, wie beispielsweise solchen im vorstehenden Absatz genannten Vertretern, verwendet werden.

Besonders bevorzugt sind thermoplastische Polymere mit Erweichungstemperaturen kleiner als 100 °C. In diesem Zusammenhang steht der Begriff Erweichungstemperatur für die Temperatur, ab der das thermoplastische Granulat mit sich selbst verklebt. Wenn es sich bei dem Bestandteil der polymeren Filmbildner-Matrix um ein semikristallines thermoplastisches Polymer handelt, dann weist es sehr bevorzugt neben seiner Erweichungstemperatur (die mit dem Schmelzen der Kristallite zusammenhängt) eine Glasübergangstemperatur von höchstens 25 °C, bevorzugt

höchstens 0 °C auf.

In einer bevorzugten, erfindungsgemäßen Ausführungsform wird ein thermoplastisches Polyurethan eingesetzt. Vorzugsweise besitzt das thermoplastische Polyurethan eine Erweichungstemperatur von kleiner als 100 °C, insbesondere kleiner als 80 °C.

In einer besonders bevorzugten, erfindungsgemäßen Ausführungsform wird Desmomelt 530® als polymere Filmbildner-Matrix eingesetzt, das im Handel bei der Bayer Material Science AG, 51358 Leverkusen, Deutschland, erhältlich ist. Desmomelt 530® ist ein hydroxyl-terminiertes, weitgehend lineares, thermoplastisches, stark kristallisierendes Polyurethan-Elastomer.

Vorteilhaft können beispielsweise 5 bis 80 Gew.-Teile wenigstens der polymeren Filmbildner-Matrix innerhalb eines reaktiven Klebstofffilms eingesetzt werden. Die Menge der polymeren Filmbildner-Matrix innerhalb eines reaktiven Klebstofffilms liegt bevorzugt erfindungsgemäß im Bereich von etwa 15 bis 60 Gew.%, bevorzugt etwa 30 bis 50 Gew.%, bezogen auf die Gesamtmenge an Polymeren der polymeren Filmbildner-Matrix und Reaktivharzen der härtbaren Zusammensetzung. Klebmassen mit besonders hohen Verklebungsfestigkeiten nach Aushärtung werden erhalten, wenn der Anteil der Filmbildnermatrix im Bereich von 15 bis 25 Gew.-% liegt. Solche Klebmassen, insbesondere mit weniger als 20% Filmbildnermatrix sind im unausgehärteten Zustand sehr weich und weniger formstabil. Die Formstabilität ist verbessert, wenn mehr als 20 Gew.-%, insbesondere mehr als 30% verwendet werden. Zwischen 40 und 50 Gew.-% werden Haftklebmassen erhalten, die im Bezug auf Formstabilität die besten Eigenschaften aufzeigen, jedoch sinkt die maximal erreichbare Verklebungsfestigkeit. Sehr ausgewogene Klebmassen im Bezug auf Formstabilität und Verklebungsfestigkeit werden im Bereich von 30 bis 40 Gew.-% Filmbildnermatrix erhalten Die vorstehende Gew.-%-Angaben sind hier jeweils bezogen auf die Summe aus die Filmbildner-Matrix bildenden Polymeren und Epoxidharzen (E).

In einer weiteren sehr bevorzugten Vorgehensweise werden als Matrixpolymere nicht-thermoplastsiche Elastomere eingesetzt. Bei den nicht-thermoplastischen Elastomeren kann es sich insbesondere um einen Nitrilkautschuk oder eine Mischung mehrerer Nitrilkautschuke oder eine Mischung eines oder mehrerer anderer nicht-thermoplastischer Elastomere mit einem oder mehreren Nitrilkautschuken handeln.

Als "nicht-thermoplastisch" im Sinne der vorliegenden Schrift werden solche Substanzen beziehungsweise Zusammensetzungen verstanden, die bei Erwärmung auf eine Temperatur von 150 °C, bevorzugt bei Erwärmung auf eine Temperatur von 200 °C, sehr bevorzugt bei Erwärmung auf eine Temperatur von 250 °C kein thermoplastisches Verhalten zeigen, insbesondere derart, dass sie im Thermoplastizitäts-Test (siehe Experimenteller Teil) als nicht thermoplastisch gelten.

Der Begriff Nitrilkautschuk' steht wie üblich für 'Acrylnitril-Butadien-Kautschuk', Kurzzeichen NBR, abgeleitet von nitrile butadiene rubber, und bezeichnet Synthesekautschuke, die durch Copolymerisation von Acrylnitril und Butadien in Masseverhältnissen von ungefähr 10 : 90 bis 52 : 48 (Acrylnitril: Butadien) gewonnen werden.

Die Herstellung von Nitrilkautschuken erfolgt praktisch ausschließlich in wässriger Emulsion. Im Stand der Technik werden die dabei resultierenden Emulsionen einerseits als solche (NBR-Latex) eingesetzt oder andererseits zum Festkautschuk aufgearbeitet.

Die Eigenschaften des Nitrilkautschuks hängen ab vom Verhältnis der Ausgangsmonomeren und von seiner Molmasse. Aus Nitrilkautschuk zugängliche Vulkanisate besitzen hohe Beständigkeit gegenüber Kraftstoffen, Ölen, Fetten und Kohlenwasserstoffen und zeichnen sich gegenüber solchen aus Naturkautschuk durch günstigeres Alterungsverhalten, niedrigeren Abrieb und verminderte Gasdurchlässigkeit aus.

Nirilkautschuke sind in einer großen Bandbreite verfügbar. Neben dem Acrylnitril-Gehalt erfolgt die Unterscheidung der verschiedenen Typen insbesondere anhand der Viskosität des Kautschuks. Diese wird üblicherweise durch die Mooney-Viskosität angegeben. Diese wiederum wird zum einen durch die Anzahl der Kettenverzweigungen im Polymer und zum anderen durch die Molmasse bestimmt. Prinzipiell unterscheidet man bei der Polymerisation zwischen der sogenannten Kalt- und der Heißpolymerisation. Die Kaltpolymerisation erfolgt üblicherweise bei Temperaturen von 5 bis 15 °C und führt im Gegensatz zur Heißpolymerisation, die üblicherweise bei 30 bis 40 °C durchgeführt wird, zu einer geringeren Anzahl von Kettenverzeigungen. Erfindungsgemäß geeignete Nitrilkautschuke sind von einer Vielzahl von Herstellern wie zum Beispiel Nitriflex, Zeon, LG Chemicals und Lanxess erhältlich.

Carboxylierte Nitrilkautschuk-Typen entstehen durch Terpolymerisation von Acrylnitril und Butadien mit kleinen Anteilen an Acrylsäure und/oder Methacrylsäure in Emulsion. Sie zeichnen sich durch hohe Festigkeit aus. Die selektive Hydrierung der C=C-Doppelbindung von Nitrilkautschuk führt zu hydrierten Nitrilkautschuken (H-NBR) mit verbesserter Beständigkeit gegen Temperaturerhöhung (bis 150 °C in Heißluft oder Ozon) oder Quellmittel (zum Beispiel schwefelhaltige Rohöle, Brems- beziehungsweise Hydraulikflüssigkeiten). Die Vulkanisation erfolgt mit üblichen Schwefelvernetzern, Peroxiden oder mittels energiereicher Strahlung. Neben carboxylierten oder hydrierten Nitrilkautschuken gibt es auch flüssige Nitrilkautschuke. Diese werden während der Polymerisation durch die Zugabe von Polymerisationsreglern in ihrer Molmasse begrenzt und werden daher als flüssige Kautschuke erhalten.

Zwecks verbesserter Verarbeitungsfähigkeit von Kautschuken, beispielsweise dem Granulieren von Granulat aus großen Kautschukballen vor der Weiterverarbeitung in Mischern, werden dem Kautschuken häufig inerte Trennhilfsmittel wie Talkum, Silicate (Talk, Ton, Glimmer), Zinkstearat und PVC-Puder zugesetzt.

In einer Ausführungsvariante der Erfindung werden als nicht-thermoplastsiche Elastomere teilweise oder ausschließlich solche Nitrilkautschuke eingesetzt, die einen Acrylnitrilantreil von mindestens 25 %, bevorzugt von mindestens 30 %, sehr bevorzugt von mindestens 35 % besitzen.

In hervorragender Weise lassen sich als Matrixpolymere heißpolymerisierte Nitrilkautschuke einetzen. Solche Nitrilkautschuke sind hochverzweigt, besitzen daher eine besonders hohen Neigung zur physikalischen Anvernetzung und zeigen somit besonders gute Scherfestigkeiten auch im unausgehärteten Zustand.

Härtungsreagenz

Wie bereits vorstehend dargelegt umfasst das Härtungsreagenz die Summe der (Co-)Härter, also die Gesamtheit der vorliegenden Härter und gegebenenfalls vorhandenen Beschleuiger, wobei zumindest ein Epoxy-Amin-Addukt anwesend ist. Das zumindest eine Epoxy-Amin-Addukt des Härtungsreagenz kann als Härter und/oder als Beschleuniger für die Härtungsreaktion dienen. Die im Rahmen dieser Schrift gemachten Aussagen zum Epoxy-Amin-Addukt gelten unabhängig davon, ob dieses als Härter oder als Beschleuniger eingesetzt wird, es sei denn es wird im Einzelfall explizit auf eine der Einsatzzwecke hingewiesen.

Epoxy-Amin-Addukte müssen üblicherweise nicht in stöchiometrischen Mengen, bezogen auf die Funktionalität des zu härtenden Epoxidharzes, eingesetzt werden, um gute Wirkung als Härter beziehungsweise als Beschleuniger zu entfalten.

Wird ein Epoxy-Amin-Addukt als alleiniger Härter eingesetzt, so betragen typische Einsatzmengen 15 bis 35 Gew.-Teile auf 100 Gew.-Teile des/der zu härtenden Epoxidharze(s). Werden mehrere Epoxy-Amin-Addukte eingesetzt, so liegt die Summe der eingesetzten Mengen vorteilhaft im vorgenannten Bereich.

Erfindungsgemäß liegt die Einsatzmenge des Epoxy-Amin-Adduktes - beziehungsweise liegt die Gesamtmenge bei mehreren eingesetzten Epoxy-Amin-Addukten - im Bereich von 0,1 bis 10 Gew.-Teile, insbesondere von 0,5 bis 5 Gew.-Teile, bevorzugt von 1 bis 3 Gew.-Teile, jeweils bezogen auf 100 Gew.-Teile des/der zu härtenden Epoxidharze(s) - wenn das beziehungsweise die Epoxy-Amin-Addukt(e) als Beschleuniger-in Kombination mit Nicht-Epoxy-Amin-Addukten als Härter - eingesetzt werden. In einigen Fällen - vor allen Dingen, wenn das Epoxy-Amin-Addukt ein etwas schwächerer Beschleuniger ist - werden vorteilhaft Mengen im Bereich von 4 - 8 Gew.-Teile verwendet.

Um auch bei erhöhten Temperaturen - beispielsweise bei 60 °C - besonders lagerfähige Reaktivklebstoffe zu erhalten (Lagerfähigkeit etwa bestimmbar nach der Lagerzeit-Methode), hat sich überraschenderweise gezeigt, dass es entgegen den Erwartungen nicht ausreicht, Härter beziehungsweise Beschleuniger nur danach auszuwählen, dass deren Erweichungspunkt oberhalb der Lagertemperatur liegt. So lassen sich häufig Systeme, deren Erweichungspunkt oberhalb der Lagertemperatur liegt, zwar verarbeiten, zeigen aber dennoch schlechte Lagerfähigkeiten im betreffenden Temperaturbereich Beispielsweise zeigen Systeme mit einem Erweichungspunkt nach MSDS von 70 °C Erweichungspunkt (Intelimer 7004) oder von sogar 89 °C (Epikure P-101) relativ schlechte Lagerfähigkeiten bei 60 °C: $L_f60 < 30\%$.

Aus diesem Grund sind in einer besonders bevorzugten Ausführungsform solche Epoxy-Amin-Addukte bevorzugt, die einen von größer/gleich 100 °C aufweisen (Erweichungspunkt bestimmt mit einem Schmelzpunktanalysator). Beispielhaft sind dies Produkte von Ajinomoto (z.B. PN-50, PN-40, MY-25, MY-24) oder ACCI "Technicure LC-80).

In besonders bevorzugter Form wird das Epoxy-Amin-Addukt, beziehungsweise werden bei Anwesenheit mehrerer Epoxy-Amin-Addukte alle Epoxy-Amin-Addukte, in partikulärer Form eingesetzt. Dies lässt sich beispielweise dadurch realisieren, dass das Epoxy-Amin-Addukt in der härtbaren Zusammensetzung dispergiert vorliegt, insbesondere in keiner anderen Komponente des Klebebandes löslich ist, insbesondere nicht einmal teillöslich ist.

Der Einsatz des (Co-)Härters in ungelöster beziehungsweise partikulärer Form führt zu einem zumindest zweiphasigen System und damit zu einer erhöhten Lagerstabilität der härtbaren Zusammensetzung. Vorteilhaft sollte die Dispersion auch bei deutlich über Raumtemperatur bestehen bleiben, beispielsweise etwa bis mindestens 90 °C, bevorzugt bis 100 °C. Erst bei Erreichen der späteren Härtungstemperatur ist eine Aktivierung des Härtungsreagenzes erforderlich; indem die partikulären Härter teilweise oder vollständig in den gelösten Zustand übergehen.

Überraschenderweise hat sich gezeigt, dass sich Epoxy-Amin-Addukte auch thermisch verarbeiten lassen z.B. bei 90 °C, wenn die Viskosität der Klebmasse auch bei dieser hohen Temperatur entgegen der Erwartung hoch ist. Eine Annahme ist - ohne sich auf diese Theorie festlegen zu wollen -, dass das unerwünschte vorzeitige Lösen solcher Addukte in Reaktivharzen aufgrund der hohen Viskosität verlangsamt ist bzw. unterbunden wird. Als vorteilhaft haben sich Viskositäten der heißen Klebemasse von größer 10 Pa s bei 90 °C, insbesondere größer 100 Pa s gezeigt. Selbst Klebmassen mit Viskositäten von über 1000 Pa s bei 90 °C konnten sowohl im Extruder, als auch im Laborkneter verarbeitet werden und zeigten sehr bevorzugte Lagerfähigkeiten, was auf die überraschende Wechselwirkung zwischen Schmelzviskosität und Epoxy-Amin-Addukten zurückgeführt wird. Der Fachmann würde sicherlich niedrigere Viskositäten bevorzugen, da in einem solchen System deutlich weniger Scherkräfte wirken, die die Addukt-Partikel in Lösung bringen könnten.

(Co-)Härter des Epoxy-Amin-Addukt-Typs umfassen die Reaktionsprodukte einer (oder mehrere) Aminverbindung(en) (Verbindung B) mit einer (oder mehreren) Verbindung(en) umfassend eine oder mehre cyclische Ethergruppen,

insbesondere Epoxidgruppen, (Verbindung A beziehunsgsweise A').

Das Epoxy-Amin-Addukt, bei mehreren anwesenden Epoxy-Amin-Addukten eines, mehrere oder bevorzugt alle Epoxy-Amin-Addukte können vorteilhaft in Form einer der nachfolgend als besonders vorteilhaft dargestellten Verbindungen eingesetzt werden, wobei bei Anwesenheit mehrerer Epoxy-Amin-Addukte die einzelnen Vertreter unabhängig voneinander ausgewählt werden können.

Im Sinne der Aminverbindung (Verbindung B) als Ausgangsmaterial des latenten (Co-)Härters vom Aminaddukt-Typ kann grundsätzlich jede beliebige Aminverbindung verwendet werden, sofern sie über einen oder mehr aktive Wasserstoffe, die eine Additionsreaktion mit einer Epoxygruppe eingehen können, und über eine oder mehrere funktionelle Gruppen pro Molekül verfügt, die aus der aus primären Aminogruppen, sekundären Aminogruppen und tertiären Aminogruppen bestehenden Gruppe ausgewählt sind, wobei auch Imidazolgruppen umfasst sind. Beispiele für solche Aminverbindungen B umfassen aliphatische Amine, wie etwa Diethylentriamin, Triethylentetramin, n-Propylamin, 2-Hydroxyethylaminopropylamin, Cyclohexylamin und 4,4'-Diaminodicyclohexylmethan; aromatische Aminverbindungen, wie etwa 4,4'-Diaminodiphenylmethan und 2-Methylanilin; und Stickstoffatom-haltige heterocyclische Verbindungen, wie etwa 2-Ethyl-4-methylimidazol, 2-Ethyl-4-methylimidazolin, 2,4-Dimethylimidazolin, Piperidin und Piperazin.

Davon können insbesondere eine (oder auch mehrere) Verbindung(en) mit mindestens einer tertiären Aminogruppe pro Molekül (Verbindung $B_t$; die Verbindungen $B_t$ bilden somit eine Teilgruppe der Verbindungen B) als Ausgangsmaterial verwendet werden, wodurch ein latenter Härter mit ausgezeichneter Härtungseffizienz erhalten wird; derartige Härter lassen sich auch vorteilhaft als Co-Härter (Beschleuniger) mit hervorragenden Härtungsbeschleunigungsfähigkeit einsetzen. In einer bevorzugten Ausführung der Erfindung weist die Verbindung mit mindestens einer tertiären Aminogruppe (Verbindung $B_t$) pro Molekül zusätzlich mindestens eine weitere Gruppe im Molekül auf, gewählt aus der Liste L bestehend aus -OH (Hydroxygruppe), -NH (sekundäre Aminogruppe), $-NH_2$ (primäre Aminogruppe), -SH (Sulfanylgruppe, synonym Mercaptogruppe), -COOH (Carboxygruppe), $-CONHNH_2$ (Säurehydrazidgruppe) (diese Verbindungen mit mindestens einer tertiären Aminogruppe und mindestens einer weiteren Gruppe aus der genannten Liste L im Molekül werden zur weiteren Kennzeichnung auch als Verbindung $B_t$' bezeichnet; die Gruppe der Verbindungen $B_t$' bildet somit eine Teilgruppe der Verbindungen $B_t$). In vorteilhafter Weise besteht die Komponente B ausschließlich aus Verbindungen $B_t$; weiter vorteilhaft ausschließlich aus Verbindungen $B_t$'.

Beispiele für eine erfindungsgemäß geeignete Verbindungen $B_t$' mit zumindest einer tertiären Aminogruppe sowie zumindest einer weiteren Gruppe aus der Liste L umfassen primäre oder sekundäre Amine mit einer tertiären Aminogruppe im Molekül, z.B. Aminverbindungen wie Dimethylaminopropylamin, Diethylaminopropylamin, Di-n-propylaminopropylamin, Dibutylaminopropylamin, Dimethylaminoethylamin, Diethylaminoethylamin und N-Methylpiperazin sowie Imidazolverbindungen wie 2-Methylimidazol, 2-Ethylimidazol, 2-Ethyl-4-methylimidazol und 2-Phenylimidazol; und Alkohole, Phenole, Thiole, Carbonsäuren und Hydrazide mit einer tertiären Aminogruppe im Molekül, wie etwa 2-Dimethylaminoethanol, 1-Methyl-2-dimethylaminoethanol, 1-Phenoxymethyl-2-dimethylaminoethanol, 2-Diethylaminoethanol, 1-Butoxymethyl-2-dimethylaminoethanol, 1-(2-Hydroxy-3-phenoxypropyl)-2-methylimidazol, 1-(2-Hydroxy-3-phenoxypropyl)- 2-ethyl-4-methylimidazol, 1-(2-Hydroxy-3-butoxypropyl)-2-methylimidazol, 1-(2-Hydroxy-3-butoxypropyl)- 2-ethyl-4-methylimidazol, 1-(2-Hydroxy-3-phenoxypropyl)-2-phenylimidazolin, 1-(2-Hydroxy-3-butoxypropyl)- 2-methylimidazolin, 2-(Dimethylaminomethyl)phenol, 2,4,6-Tris(dimethylaminomethyl)phenol, N-β-Hydroxyethylmorpholin, 2-Dimethylaminoethanthiol, 2-Mercaptopyridin, 2-Benzoimidazol, 2-Mercapto-benzoimidazol, 2-Mercaptobenzothiazol, 4-Mercaptopyridin, N,N-Dimethylaminobenzoesäure, N,N-Dimethylglycin, Nicotinsäure, Isonicotinsäure, Picolinsäure, N,N-Dimethylglycinhydrazid, N,N-Dimethylpropion-säurehydrazid, Nicotinsäurehydrazid und Isonicotinsäurehydrazid.

Cyclische Ether, insbesondere Epoxidverbindungen, die im Sinne der Verbindung A' als eines der Ausgangsmaterialien für Epoxy-Amin-Addukte verwendet werden können, um latente Härter/Beschleiniger vom festen Dispersions-Typ herzustellen, umfassen beispielsweise einen Polyglycidylether, der durch Umsetzung eines mehrwertigen Phenols, wie etwa Bisphenol A, Bisphenol F, Bisphenol AD, Katechin, Bisphenol S oder Resorcin, oder eines mehrwertigen Alkohols, wie etwa Glycerin oder Polyethylenglykol, mit Epichlorhydrin erhalten wurde; ein Glycidyletherester, der durch Umsetzen einer Hydroxycarbonsäure, wie etwa p-Hydroxybenzoesäure oder β-Hydroxynaphthoesäure, mit Epichlorhydrin erhalten wurde; ein Polyglycidylester, der durch Umsetzen einer Polycarbonsäure, wie etwa Phthalsäure oder Terephthalsäure, mit Epichlorhydrin erhalten wurde; eine Glycidylaminverbindung, die durch Umsetzung von 4,4'-Diaminodiphenylmethan oder m-Aminophenol mit Epichlorhydrin erhalten wurde; eine polyfunktionelle Epoxyverbindung, wie etwa ein epoxidiertes Phenolnovolakharz; ein epoxidiertes Kresolnovolakharze, ein epoxidiertes Bisphenol-A-Novolak; oder ein epoxidiertes Polyolefin; und eine monofunktionelle Epoxyverbindung, wie etwa Butylglycidylether, Phenylglycidylether oder Glycidylmethacrylat.

Um die Stabilität der Epoxy-Amin-Addukte und damit die Lagerstabilität der Epoxidharzzusammensetzung vorliegender Erfindung noch weiter zu verbessern, kann der (Co-)Härter vom Epoxy-Amin-Typ (also das Addukt aus den Verbindungen A und B) weiter modifiziert werden, indem als optionales drittes Ausgangsmaterial bei dessen Herstellung eine stabilisierende Komponente (zur Kennzeichnung im weiteren auch als Komponente C bezeichnet, bestehend aus einer oder mehreren Verbindungen C) zugesetzt wird; wie insbesondere etwa eine oder mehrere aktive

Wasserstoffverbindungen mit zwei oder mehr aktiven Wasserstoffen pro Molekül.

Beispiele für solche aktive Wasserstoffverbindungen umfassen mehrwertige Phenole - wie etwa Bisphenol A, Bisphenol F, Bisphenol S, Hydrochinon, Katechin, Resorcin, Pyrogallol und Phenolnovolakharze -; mehrwertige Alkohole - wie etwa Trimethylolpropan.

Als aktive Wasserstoffverbindungen für die stabilisierenden Komponente C können auch Carbonsäuren eingesetzt werden. Als Carbonsäuren als Vertreter der Verbindung C sind insbesondere mehrbasige Carbonsäuren erfindungsgemäß gut geeignet, wie etwa Adipinsäure und Phthalsäure; 1,2-Dimercaptoethan; 2-Mercaptoethanol; 1-Mercapto-3-phenoxy-2-propanol; Mercapto¬essigsäure; Anthranilsäure; und/oder Milchsäure.

In einer vorteilhaften Ausführung der Erfindung wird die Komponente C in Gegenwart von 0,05 bis 5,0 Mol-Äquivalent Wasser pro Mol-Äquivalent an Epoxygruppen in Komponente A" eingesetzt; wobei weiter vorteilhaft das Verhältnis von Wassermolekülen zu Epoxygruppen der Komponente A' im Bereich von 1 : 1 angestrebt wird.

Der gemäß vorliegender Erfindung verwendbare latente (Co-)Härter vom Epoxy-Amin-Adukttyp kann beispielweise erhalten werden, indem die relevanten Ausgangsmaterialien in einer Kombination von (i) zwei Ausgangsmaterialien, nämlich einer Aminverbindung (Verbindung B) und einer Epoxyverbindung (Verbindung A), oder (ii) drei Ausgangsmaterialien, nämlich den zwei Ausgangsmaterialien (Verbindungen A und B) und der stabilisierenden Komponente (Verbindung(en) C), vermischt werden, das Gemisch bei einer Temperatur in einem Bereich von Raumtemperatur bis 200°C umgesetzt wird, anschließend das Reaktionsgemisch abgekühlt, verfestigt und pulverisiert wird, oder indem die Ausgangsmaterialien in einem Lösungsmittel wie Methylethylketon, Dioxan oder Tetrahydrofuran umgesetzt werden, das Lösungsmittel entfernt und anschließend der Feststoff pulverisiert wird. Von den Verbindungsgruppen umfasst sind selbstredend auch die jeweiligen Teilgruppen.

Die erfindungsgemäßen Epoxy-Amin-.Addukte, insbesondere wie verstehend beschrieben erhaltenen Epoxy-Amin-Addukte, können in erfindungsgemäß vorteilhafter Weise stabilisiert werden, beziehungsweise - bei Anwesenheit der stabilisierenden Komponente C - zusätzlich stabilisiert werden, wenn nach der Herstellung des Aminadduktes eine oder mehrere Boratesterverbindungen und/oder eine oder mehrere Isocyanatverbindungen (zur weiteren Kennzeichnung im folgenden auch als Komponente D bezeichnet, bestehend aus den Verbindungen D) zugegeben und somit zur Deaktivierung freier Amingruppen verwendet werden. Bei der Aktivierung der (Co-)Härter werden die Amingruppen dann wieder in die aktive Form überführt.

Das Epoxy-Amin-Addukt dient im alleinigen Einsatz als Härter für die Härtungsreaktion der härtbaren Zusammensetzung. Wird es zusammen mit weiteren, als Härter und/oder Beschleuniger dienenden chemischen Verbindungen eingesetzt, kann es selbst als Härter oder als Beschleuniger für die Härtungsreaktion der härtbaren Zusammensetzung dienen.

In einer besonders bevorzugten Ausführungsform wird als (Co-)Härter zumindest ein Epoxy-Amin-Addukt eingesetzt, das das Reaktionsprodukt aus

(a) einer polyfunktionellen Epoxidkomponente A',

(b) einer Verbindung $B_t$" mit sowohl einer OH-Gruppe, $NH_2$-Gruppe, NH-Gruppe oder SH-Gruppe als auch einer tertiären Aminogruppe im Molekül und

(c) einer stabilisierenden Komponente C'

umfasst oder ist (im folgenden als Epoxy-Amin-Addukt vom Typ A'$B_t$"C' bezeichnet).

Die Verbindungen A' bilden dabei eine Teilgruppe der Verbindungen A; Bt" bilden eine Teilgruppe der Verbindungen $B_t$' und somit auch der Verbindungen B und $B_t$; und die Verbindungen C', die die Komponente C' darstellen, eine Teilgruppe der Verbindungen C. In vorteilhafter Weise wird eine einzige Verbindung C' als Komponente C' eingesetzt.

Wie vorstehend bereits ausgeführt können diese Epoxy-Amin-Addukte vom Typ A'Bt"C' nach ihrer Herstellung durch

(d) Boratesterverbindungen und/oder Isocyanatverbindungen (Verbindungen D)
stabilisiert sein.

In einer vorteilhaften Ausführung umfassen der Verbindungen $B_t$" keine Säuregruppen und keine Säurehydrazidgruppen im Molekül.

Das Epoxy-Amin-Addukt vom Typ A'$B_t$"C' kann als alleiniger Härter, als (Co-)Härter in Kombination mit weiteren (Co-)Härtern in Form von Epoxy-Amin-Addukten - und zwar solchen, die ebenfalls das Reaktionsprodukt aus (a) einer polyfunktionellen Epoxidkomponente A', (b) einer Verbindung $B_t$" mit sowohl einer OH-Gruppe, $NH_2$-Gruppe, NH-Gruppe oder SH-Gruppe als auch einer tertiären Aminogruppe im Molekül und (c) einer stabilisierenden Komponente C' (also ebenfalls vom Typ A'$B_t$"C') sind, und/oder mit solchen, die diese Bedingung nicht erfüllen (also nicht vom Typ A'$B_t$"C' sind, - und/oder in Kombination mit (Co-)Härtern, die keine Epoxy-Amin-.Addukte sind, im Härtungsreagenz eingesetzt werden.

Das Epoxy-Amin-Addukt vom Typ A'$B_t$"C', bei mehreren anwesenden Epoxy-Amin-Addukten vom Typs A'$B_t$"C' eines, mehrere oder bevorzugt alle Epoxy-Amin-Addukte vom Typ A'$B_t$"C' können vorteilhaft in Form einer der nachfolgend als besonders vorteilhaft dargestellten Verbindungen eingesetzt werden, wobei bei Anwesenheit mehrerer Epoxy-Amin-Addukte vom Typ A'$B_t$"C' die einzelnen Vertreter unabhängig voneinander ausgewählt werden können.

Die polyfunktionelle Epoxidkomponente A' kann grundsätzlich wie oben definiert gewählt werden und kann beispielsweise ein Polyglycidylether, ein Polyglycidyletherester, ein Polyglycidylester, ein Glycidylamin ein epoxidierter Novolak oder ein epoxidiertes Polyolefin sein.

Als Verbindung Bt" lassen sich vorteilhaft Verbindungen der allgemeinen Formel

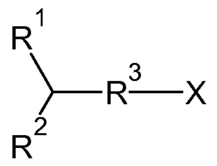

(I)

einsetzen, wobei

X gleich -OH, $-NH_2$, -NH oder -SH ist,
$R^1$ und $R^2$ unabhängig voneinander gewählt sind aus der Gruppe aus

- Wasserstoffatomen,
- $C_1$- bis $C_{20}$-Alkylgruppen,
- $C_2$- bis $C_{20}$-Alkenylgruppen,
- unsubstituierten aromatischen Kohlenwasserstoffgruppen
- substituierten aromatischen Kohlenwasserstoffgruppen, insbesondere substituiert mit Sauerstoff, Halogen, -OH, $-NH_2$, -NH und/oder -SH,

$R^3$ eine gesättigte oder ungesättigte, unverzweigte oder verzweigte Kohlenwasserstoffkette mit 1 bis 20 C-Atomen ist.

Weiter vorteilhaft lassen sich als Verbindung $B_t$" Verbindungen der allgemeinen Formel

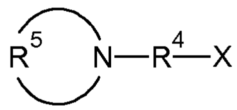

(IIa)

oder

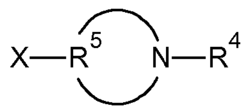

(IIb)

wählen, wobei

X gleich -OH, $-NH_2$, -NH oder -SH ist,
$R^4$ eine gesättigte oder ungesättigte, unverzweigte oder verzweigte Kohlenwasserstoffkette mit einem bis 20 C-Atomen ist,
$R^5$ ein cyclisch zweifach an das Stickstoffatom gebundener, aliphatischer oder aromatischer; gesättigter oder ungesättigter; unsubstituierter oder substituierter Kohlenwasserstoffrest mit 2 bis 20 C-Atomen, die teilweise durch Heteroatome substituiert sein können, ist, wobei also $R^5$ mit dem Stickstoffatom einen Ring bildet..

Insbesondere vorteilhaft lassen sich als Verbindung $B_t$" Verbindungen der allgemeinen Formel

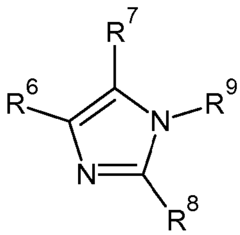

(III)

einsetzen, wobei

$R^6$, $R^7$, $R^8$ und $R^9$ unabhängig voneinander gewählt sind aus der Gruppe aus

- Wasserstoffatomen,
- $C_1$- bis $C_{20}$-Alkylgruppen,
- $C_2$- bis $C_{20}$-Alkenylgruppen,
- unsubstituierten aromatischen Kohlenwasserstoffgruppen
- substituierten aromatischen Kohlenwasserstoffgruppen, insbesondere substituiert mit Sauerstoff, Halogen, -OH, $-NH_2$, -NH und/oder -SH,
- -OH, $-NH_2$, -NH und/oder -SH,

mit der Maßgabe, dass
$R^9$ = H oder dass mindestens eine der Gruppen $R^6$ bis $R^8$ eine der Gruppen -OH, $-NH_2$, -NH oder -SH ist.

Als Verbindung $B_t$'' lässt sich dabei beispielsweise eine Verbindung oder lassen sich mehrere Verbindungen aus der folgenden Liste vorteilhaft einsetzen:
2-Dimethylaminethanol, 1-Methyl-2-Dimethylaminoethanol, 1-Phenoxymethyl-2-dimethylaminoethanol, 2-Diethylaminoethanol, 1-Butoxymethyl-2-Dimethylaminoethanol, 1-(2-Hy-droxy-3-Phenoxypropyl)-2-Methylimidazol, 1-(2-Hydroxy-3-Phenoxypropyl)-2-Ethyl-4-Methyl-imidazol, 1-(2-Hydroxy-3-Butoxypropyl)-2-Methylimidazol, 1-(2-Hydroxy-3-Butoxypropyl)-2-Ethyl-4-Methylimidazol, 1-(2-Hydroxy-3-Phenoxypropyl)-2-Phenylimidazolin, 1-(2-Hydroxy-3-Butoxypropyl)-2-Methylimidazolin, 2-(Dimethylaminomethyl)phenol, 2,4,6-Tris(dimethylaminomethyl)phenol, N-β-Hydroxyethylmorpholin, 2-Dimethylaminoethylamin, 3-Dimethyl-aminon-Propylamin, 2-Diethylaminoethylamin, 3-Diethylamino-n-Propylamin, N-Methyl-piperazin, Imidazol, 2-Methylimidazol, 2-Ethylimidazol, 2-Ethyl-4-Methylimidazol, 2-Iso-propylimidazol, 2-Undecylimidazol, 2-Octadecylimidazol, 2-Phenylimidazol, 2-Phenyl-4-Methylimidazol, 2-Dimethylaminoethanethiol, Methimidazol, 2-Mercaptobenzoimidazol, 2-Mercaptobenzothiazol.

Die stabilisierende Komponente C' dient zur Erhöhung der Lagerfähigkeit der mit dem Epoxy-Amin-Härter/Beschleuniger des Typs A'$B_t$''C' versehenen Klebmasse. Sehr vorteilhaft ist es, wenn die Komponente C' in Gegenwart von 0,05 bis 5,0 Mol-Äquivalent Wasser pro Mol-Äquivalent an Epoxygruppen in Komponente A' eingesetzt wird; wobei weiter vorteilhaft das Verhältnis von Wassermolekülen zu Epoxygruppen der Komponente A' im Bereich von 1 : 1 angestrebt wird.

Als Verbindungen für die stabilisierende Komponente C' werden insbesondere vorteilhaft solche Verbindungen eingesetzt, die zwei oder mehr aktive Wasserstoffatome im Molekül aufweisen. In einer bevorzugten Ausführungsform enthält die stabilisierende Komponente C' entweder mindestens eine primäre Aminogruppe ($-NH_2$) oder mindestens eine Hydrazid-Gruppe ($CONHNH_2$) oder mindestens 2 funktionelle Gruppen, ausgewählt aus OH-Gruppe, SH-Gruppe, NH-Gruppe und COOH-Gruppe, wobei Epoxidgruppen und tertiäre Aminogruppen jeweils nicht enthalten sind.

Vorteilhafte Beispiele für Vertreter der stabilisierenden Komponente C' sind Amine mit mindestens zwei aktiven Wasserstoffatomen, wie Piperazin, Anilin, Cyclohexylamin; mehrfachfunktionelle Carbonsäuren, wie Adipinsäure, Phthalsäure, 3-[9-(2-Carboxyethyl)-2,4,8,10-Tetraoxaspiro[5.5]undecan-3-yl]propansäure CAS: 3058-05-7; Polyvalente Thiole, wie 1,2-Dimercaptoethan und 2-Mercaptoethylether; Hydrazide, wie Phenylessigsäurehydrazid; Aminosäuren, wie Alanin und Valin; Verbindungen mit 2 oder mehr verschiedenen funktionellen Gruppen, wie 2-Mercaptoethanol, 1-Mercapto-3-phenoxy-2-propanol, Mercaptoessigsäure, N-methylethanolamin, Diethanolamin, Hydroxyanilin, N-Methyl-o-aminobenzoesäure, Anthranilsäure, Sarkosin, Hydroxybenzoesäure, Milchsäure; mehrwertige Alkohole, wie Pentaaerythrit, Sorbitol, Trimethylolpropan, Trimethylolethan und Isocyanursäure Tris-(2-hydroxyethyl)ester; mehrwertige Phenole wie Bisphenol A, Bisphenol F, Bisphenol S, Hydrochinon, Benzcatechin, Resorcin, Benzol-1,2,3-triol, Phenol-Novolak-Harze, Cresol-Novolak-Harze und Bisphenol-A-Novolak-Harze.

Weitere vorteilhafte Beispiele für Vertreter der stabilisierenden Verbindungen C' sind Carbonsäuren. Umfasst die stabilisierende Komponente C' eine Carbonsäure oder wird ausschließlich aus einer oder mehreren Carbonsäuren gebildet, so werden insbesondere Mono- und Dicarbonsäuren, in untergeordneten Mengen auch Tricarbonsäuren, wie

sie z.B. als Nebenprodukt in Dimerfettsäuren auftreten, eingesetzt. Geeignete Monocarbonsäuren können 2 bis 24, vorzugsweise 10 bis 18 Kohlenstoffatome enthalten. Diese Monocarbonsäuren können gesättigt oder ungesättigt sein. Außerdem können sie auch verzweigt sein, sowie aromatische und cycloaliphatische Ringe aufweisen. Als spezielle Beispiele seien Capryl-, Caprin-, StearinSäure sowie Linol- und Linolensäure genannt.

Als Dicarbonsäuren eignen sich im allgemeinen solche mit 3 - 38, vorzugsweise 4 - 36 Kohlenstoffatomen. Erfindungsgemäß vorteilhaft geeignet sind beispielsweise Adipinsäure, Sebazinsaure, Nonan-, Decan-Dicarbonsäure, Dimerfettsäuren, wie z.B. Pripol® 1014 (= dimerisierte Fettsäure der Fa. Unilever) sowie aromatische oder cycloaliphatische Dicarbonsäuren wie Phthalsäure und Terephthalsäure. Es können auch Gemische der obengenannten Carbonsäuren eingesetzt werden. Bevorzugt sind Dimerfettsäuren.

Als stabilisierende Verbindungen C' für Epoxy-Amin-(Co-)Härter des Typs A'$B_t$"C', insbesondere für solche ohne Carbonsäuregruppen und ohne Säurehydrazidgruppen in der Verbindung $B_t$", können vorteilhaft auch Carbonsäureanhydride eingesetzt werden. Carbonsäureanhydride können in vorteilhafter Weise gewählt werden aus der Liste, die aus Bernsteinsäureanhydrid, Phthalsäureanhydrid, Tetrahydrophthalsäureanhydrid, Methyltetrahydrophthalsäureanhydrid, Hexahydrophthalsäureanhydrid, Methylhexahydrophthalsäureanhydrid, Methyl-5-norbornen-2,3-dicarbonsäureanhydrid, Dodecenylbernstein-säureanhydrid, Pyromellitsäure-dianhydrid oder 5-(2,5-Diketo-tetrahydrofuryl)-3-methyl-3-cyclohexen-1,2-Dicarbonsäureanhydrid gebildet ist.

Typische und vorteilhaft verwendbare Beispiele für am Markt erhältliche Verbindungen, die als latente Härter beziehungsweise Beschleuniger eingesetzt werden können, umfassen Epoxy-Amin-Adducttypen (Aminadducttypen), wie etwa "Ajicure PN-40", "Ajicure PN-50", "Ajicure MY-25", "Ajicure MY-24" (Handelsnamen von Ajinomoto Co., Inc. hergestellten Produkten). Weitere Epoxy-Amin-Addukte sind beispielsweise verkapselte Epoxy-Amin-Adducttypen "Novacure HX-3742" und "Novacure HX-3721" (Handelsnamen von Asahi Chemical Industry Co., Ltd. hergestellten Produkten)..

Optional können weitere stabilisierende Komponenten eingesetzt werden, im Rahmen dieser Schrift als Verbindungen D beziehungsweise Komponente D bezeichnet. Diese Komponente wird nach Herstellung des Epoxy-Amin-Addukts zugegeben, insbesondere gemeinsam mit Wasser, siehe weiter oben. Sie dient insbesondere zur Verbesserung der Lagerstabilität des (Co-)Härters und somit auch der mit einem solchen (Co-)Härter versetzten, zu härtenden Epoxidzusammensetzung. Es wird angenommen, dass die Funktionalität einem Mechanismus folgt, der die Verbindung mit der Oberfläche von Teilchen des latenten (Co-)Härters vom festen Dispersionstyp reagieren lässt, um diesen für die Einkapselung zu modifizieren. Vorteilhaft geeignet sind beispielsweise Boratesterverbindungen. Typische Beispiele für erfindungsgemäß geeignete Boratesterverbindungen umfassen Trimethylborat, Triethylborat, Tri-n-propylborat, Triisopropylborat, Tri-n-butylborat, Tripentylborat, Triallylborat, Trihexylborat, Tricyclohexylborat, Trioctylborat, Trinonylborat, Tridecylborat, Tridodecylborat, Trihexadecylborat, Trioctadecylborat, Tris(2-ethylhexyloxy)boran, Bis(1,4,7,10-tetraoxaundecyl)(1,4,7,10,13-pentaoxatetradecyl)(1,4,7-trioxaundecyl)boran, Tribenzylborat, Triphenylborat, Tri-o-tolylborat, Tri-m-tolylborat und Triethanolaminborat. Davon wird Triethylborat bevorzugt.

Wie vorstehend bereits ausgeführt sind Beschleuniger solche chemischen Verbindungen, die in zusätzlichem Einsatz zu einem oder mehreren Härtern die Reaktionsgeschwindigkeit der Härtungsreaktion und/oder die Geschwindigkeit der Aktivierung der Härtungsreaktion - im Vergleich zum Ablauf in Abwesenheit des/der Beschleuniger(s) - erhöhen. Dies kann mittels DSC bestimmt werden. So wird der Reaktionspeak durch Zugabe geeigneter Beschleuniger zu niedrigeren Temperaturen verschoben.

Die härtbare Zusammensetzung, insbesondere Klebemasse, des erfindungsgemäßen Klebebandes kann erfindungsgemäß einen oder mehrere Beschleuniger enthalten. Ein Beschleuniger bewirkt etwa insbesondere, dass die Starttemperatur für die Vernetzungsreaktion des Reaktivharzes und/oder die Reaktionstemperatur, bei der die Härtungsreaktion fortschreitet, verringert wird. Damit wird die Handhabung bei der Verklebung verbessert. Dabei ist zu beachten, dass die durch die Zugabe eines Beschleunigers gesenkte Starttemperatur als Nachteil mit einer verringerten Lagerstabilität einhergeht, da die Senkung der Starttemperatur auch eine ungewünschte erhöhte Reaktion während der Lagerung bewirkt. Trotzdem sind die erfindungsgemäßen Klebebänder in ihrer Lagerstabilität den mit Epoxidklebstoffen getränkten Prepregs des Standes der Technik weit überlegen.

Will man den genannten Effekt jedoch vermeiden, kann auf Beschleuniger auch ganz verzichtet werden.

Als Beschleuniger können grundsätzlich und erfindungsgemäß besonders vorteilhaft die Verbindungen eingesetzt werden, wie sie vorstehend als Härter beschrieben werden; die dort gemachten Ausführungen sind entsprechend übertragbar. Bei der Wahl des Beschleunigers wird dessen Reaktivität insbesondere vorteilhaft mit derjenigen des beziehungsweise der eingesetzten Härter(s) abgestimmt, um den Beschleunigereffekt zu erzielen. So kann etwa der Härter beziehungsweise können die Härter derart ausgewählt werden, dass die Härtungsreaktion möglichst effektiv und/oder vollständig abläuft, während der Beschleuniger beziehungsweise die Beschleuniger derart gewählt ist beziehungsweise sind, dass die Reaktionsgeschwindigkeit und/oder die Geschwindigkeit der Aktivierung erhöht sind, insbesondere die Reaktionstemperatur der Härtung und/oder die Starttemperatur der Härtungsreaktion gesenkt werden.

In einer weiteren Ausführungsvariante der Erfindung umfasst das Härtungsreagenz - zusätzlich zu dem bzw. den Epoxy-Amin-Addukt(en) als (Co-)Härter - einen oder mehrere Härter für die Epoxidharze (E) und/oder einen oder

mehrere Beschleuniger für die Härtungsreaktion der Epoxidharze (E), wobei diese Härter beziehungsweise Beschleuniger keine Epoxy-Amin-Addukte sind.

Als solche zusätzlichen Härter beziehungsweise Beschleuniger können insbesondere vorteilhaft Verbindungen aus der folgenden Liste aus Dicyandiamid, Anhydriden, geblockten oder ungeblockten Imidazolen, Hydraziden und Reaktionsprodukten aus Disäuren und multifunktionellen Aminen gewählt werden. Als Reaktionsprodukte aus Disäuren und multifunktionellen Aminen kommen beispielsweise Reaktionsprodukte aus Phthalsäure und Diethylentriamin in Betracht.

In einer sehr bevorzugten Ausführung der Erfindung umfasst das Härtungsreagenz Dicyandiamid sowie ein oder mehrere Epoxy-Amin-Addukte. Noch weiter bevorzugt besteht das Härtungsreagenz ausschließlich aus Dicyandiamid sowie einem oder mehreren Epoxy-Amin-Addukte. In Kombination mit Dicyandiamid übernimmt das eine Epoxy-Amin-Addukt, oder bei Anwesenheit mehrerer Epoxy-Amin-Addukte zumindest eines der Epoxy-Amin-Addukte, üblicherweise die Wirkung eines Beschleunigers, erhöht also die Reaktionsgeschwindigkeit der Härtungsreaktion des Epoxidharzes vergleichen mit der Situation, bei der Dicyandiamid als einzige Komponente des Härtungsreagenzes vorliegen würde.

Gegenstand der Erfindung ist somit weiterhin ein Klebeband umfassend zumindest eine Schicht einer haftklebrigen Klebemasse, wobei die Klebemasse eine polymere Filmbildner-Matrix sowie eine härtbare Zusammensetzung umfasst, wobei die härtbare Zusammensetzung zumindest ein Epoxidharz (E) sowie zumindest ein Härtungsreagenz für das Epoxidharz (E) umfasst, und wobei das Härtungsreagenz $\alpha$) zumindest ein Epoxy-Amin-Addukt, nämlich das Reaktionsprodukt aus zumindest einer Verbindung A, die zumindest eine cyclische Ethergruppe im Molekül aufweist, und zumindest einer Aminverbindung B, und $\beta$) Dicyandiamid umfasst oder aus diesen Komponenten $\alpha$) und $\beta$) besteht.

Stöchimetrische Härter wie beispielsweise Dicyandiamid werden bevorzugt auf die Epoxidmenge des Klebstoffes bezogen eingesetzt. Dazu wird zunächst der EEW der Epoxidmischung nach folgender Formel berechnet:

$$EEW_{ges} = m_{ges} / \sum \frac{m_i}{EEW_i}$$

wobei

$m_{ges}$ = Summe $m_i$
$m_i$ Massen der einzelnen Komponenten i der Mischung
$EEW_i$ = Epoxyäquivalente der Komponenten i

Die Härtermenge $m_H$ ergibt sich dann aus dem Aminäquivalent des Härters (AEW) und dem $EEW_{ges}$ der Epoxidmischung wie folgt:

$$m_H = AEW * ( m_i / EEW_{ges} )$$

Die als Beschleuniger wirkenden Epoxy-Amin-Addukte werden dann vorteilhaft von 0,1 bis 10 Gew.-Teile, insbesondere von 0,5 bis 5 Gew.-Teile, bevorzugt von 1 bis 3 Gew.-Teile eingesetzt, jeweils bezogen auf 100 Gew.-Teile des zu härtenden Epoxidharzes (E). In einigen Fällen - vor allen Dingen, wenn das Epoxy-Amin-Addukt ein etwas schwächerer Beschleuniger ist - werden Mengen im Bereich von 4 - 8 Gew.-Teile verwendet.

Sofern zusätzlich zu den Epoxidharzen (E) andere Reaktivharze in der härtbaren Zusammensetzung zugegen sind, können weiterhin auch spezielle Härter und/oder Beschleuniger zur Reaktion mit diesen Komponenten zugegeben sein.

Epoxidharze (E)

Als Epoxidharz(e) (E) der härtbaren Zusammensetzung kann ein einziges Epoxidharz oder eine Mischung von Epoxidharzen eingesetzt werden. Grundsätzlich können bei Raumtemperatur flüssige Epoxidharze oder bei Raumtemperatur feste Epoxidharze oder Mischungen hiervon eingesetzt werden.

Vorzugsweise ist das eine Epoxidharz (E) oder mindestens eines der Epoxidharze (E) ein Feststoff; insbesondere ein solcher mit einer Erweichungstemperatur von mindestens 45 °C oder ein solcher mit einer Viskosität bei 25 °C von mindestens 20 Pa s, bevorzugt 50 Pa s, insbesondere mindestens 150 Pa s (gemessen nach DIN 53019-1; 25 °C, Schergeschwindigkeit 1 x $s^{-1}$).

In einer günstigen Ausführung des erfindungsgemäßen Klebebandes umfassen die Epoxidharze (E) eine Mischung von bei 25 °C flüssigen und bei 25 °C festen Epoxidharzen. Der Anteil der flüssigen Epoxidharze an den

Epoxidherzen (E) liegt insbesondere bei 10 bis 90 Gew.-%, weiter bevorzugt bei 20 bis 75 Gew.-%. Die jeweilige Differenz auf 100 Gew.-% der Epoxidharze ist dann durch feste Epoxidharze gegeben. Klebebänder mit solchen Verhältnissen aus flüssigen und festen Epoxid-Komponenten zeigen im unausgehärteten Zustand besonders ausgewogene Klebeigenschaften. Wird ein Klebeband mit besonders guten Auffließeigenschaften gewünscht, so ist der Anteil an flüssigen Epoxidkomponenten bevorzugt 50 bis 80 Gew.-%. Für Anwendungen, bei denen die Klebebänder bereits im unausgehärteten Zustand eine höhere Last tragen müssen, ist ein Anteil von 15 bis 45 Gew.-% besonders bevorzugt. Es kann ein solches Harz oder auch eine Mischung verschiedener Harze eingesetzt werden.

Weiter bevorzugt umfassen die Epoxidharze (E) wenigstens zwei unterschiedliche Epoxidharze (E-1) und (E-2), von denen

a. das erste Epoxidharz (E-1) bei 25 °C eine dynamische Viskosität von weniger als 500 Pa*s aufweist, gemessen nach DIN 53019-1 bei einer Messtemperatur von 25 °C und einer Schergeschwindigkeit 1 x $s^{-1}$, und

b. von denen das zweite Epoxidharz (E-2) eine Erweichungstemperatur von wenigstens 45 °C oder bei 25 °C eine dynamische Viskosität von wenigstens 1000 Pa*s aufweist, gemessen nach DIN 53019-1 bei einer Messtemperatur von 25 °C und einer Schergeschwindigkeit 1 $\times$ $s^{-1}$,

wobei insbesondere der Anteil des ersten Epoxidharzes (E-1) 10 bis 90 Gew.-%, bevorzugt 20 bis 75 Gew.-% und der Anteil des zweiten Epoxidharzes (E-2) 10 bis 90 Gew.-%, bevorzugt 25 bis 80 Gew.-% beträgt, bezogen auf die Gesamtheit an Epoxidharzen (E). Vorteilhaft besteht die Epoxidharz-Komponetne (E) aus diesen beiden Epoxidharze (E-1) und (E-2), so dass sich der Anteil der beiden Epoxidharze (E-1) und (E-2) am gesamten Epoxidharz (E) zu 100 Gew.-% addieren.

Besonders gute Haftklebstoffe werden erhalten, wenn der Anteil von Epoxidharz (E-2) im Bereich von 40 bis 80 Gew.-%, insbesondere 60 bis 75 Gew.-% ist. In einer speziellen Ausführungsform ist der Anteil an Epoxidharzen (E-2), die eine Erweichungstemperatur von wenigstens 45 °C haben, mindestens 35 Gew.-%, insbesondere im Bereich 40 bis 70 Gew.-%.

Die Kohäsion der unvernetzten Haftklebstoffe bei trotzdem ausreichender Haftklebrigkeit ist besonders gut, wenn der Anteil an Epoxidharzen mit einer Erweichungstemperatur von wenigstens 45 °C mindestens 15 Gew.-% beträgt, insbesondere im Bereich von 20 Gew.-% bis 75 Gew.-% liegt, bezogen auf das gesamte Epoxidharz (E). Das Auffließverhalten wird verbessert, wenn weniger als 55 Gew.-%, insbesondere zwischen 25 Gew.-% und 45 Gew.-% enthalten sind.

Als Epoxidharz (E) oder als ein Teil der Gesamtheit der Epoxidharze (E) vorteilhaft einzusetzende Epoxidharze sind beispielsweise elastomermodifizierte Epoxidharze, silanmodifizierte Epoxidharze oder fettsäuremodifizierte Epoxidharze.

Als elastomermodifizierte Epoxidharze im Sinne der vorliegenden Erfindung sind - insbesondere flüssige, in der Regel hochviskose - Epoxidharze mit einer mittleren Funktionalität von mindestens zwei und einem Elastomergehalt von bis zu 50 Gew.-%, vorzugsweise mit einem solchen von 5 - 40 Gew.-%, zu verstehen. Die Epoxidgruppen können endständig und/oder in der Seitenkette des Moleküls angeordnet sein. Der elastomere Strukturanteil dieser flexibilisierten Epoxidharze besteht aus Polyenen, Dienmischpolymeren und Polyurethanen, vorzugsweise aus Polybutadien, Butadien-Styrol- oder Butadien-Acrylnitril-Mischpolymeren.

Ein durch Butadien-Acrylnitril-Copolymere (Nitrilkautschuk) modifizierte Epoxidharz ist beispielsweise ein Epoxid-Vorpolymer, das durch Modifizierung eines Epoxidharzes, mit mindestens zwei Epoxidgruppen in den Molekülen, mit einem Nitrilkautschuk erhalten wird. Als Epoxidbasis wird vorteilhaft ein Reaktionsprodukt aus Glycerin oder Propylenglycol und einer halogenhaltigen Epoxidverbindung, wie Epichlorhydrin, oder das Reaktionsprodukt aus einem mehrwertigen Phenol, wie Hydrochinon, Bisphenol-A, und einem halogenhaltigen Epoxid verwendet. Wünschenswert ist ein Reaktionsprodukt aus einem Epoxidharz vom Bisphenol-A-Typ mit zwei endständigen Epoxidgruppen.

Zum Anbinden der Epoxidharze kann im Falle von Butadien-Polymeren oder Butadien-Acrylnitril-Copolymeren (sogenannte Nitrilkautschuke) ein drittes Monomer mit Säurefunktion - zum Beispiel Acrylsäure - mit einpolymerisiert werden.

Aus der Säure und den Nitrilkautschuken werden sogenannte carboxy-terminierte-Nitrilkautschuke (CTBN) erhalten. In der Regel enthalten diese Verbindungen nicht nur an den Enden, sondern auch entlang der Hauptkette Säuregruppen. CTBN werden beispielsweise unter dem Handelsnamen Hycar von der Firma B. F. Goodrich angeboten werden. Diese haben Molmassen zwischen 2000 und 5000 und Acrylnitrilgehalte zwischen 10 % und 30 %. Konkrete Beispiele sind Hycar CTBN 1300 x 8, 1300 x 13 oder 1300 x 15.

Entsprechend verläuft die Reaktion mit Butadien-Polymeren.

Durch Reaktion von Epoxidharzen mit CTBN werden sogenannte epoxy-terminierte-Nitrilkautschuke (ETBN) erhalten, die für diese Erfindung besonders bevorzugt verwendet werden. Kommerziell sind solche ETBN beispielsweise von der Firma Emerald Materials unter dem Namen HYPRO ETBN (vorher Hycar ETBN) - wie beispielsweise Hypro 1300X40 ETBN, Hypro 1300X63 ETBN und Hypro 1300X68 ETBN - erhältlich.

Ein Beispiel für einen epoxy-terminierten Butadienkautschuk ist Hypro 2000X174 ETB.

Weitere Beispiele für elastomer-modifizierte epoxy-funktionale Verbindungen sind ein Reaktionsprodukt eines Diglycidylethers von Neopentylalkohol und eines Butadien/Acrylnitril-Elastomers mit Carboxylenden (z. B. EPONTM Resin 58034 von Resolution Performance Products LLC), ein Reaktionsprodukt eines Diglycidylethers von Bisphenol-A und eines Butadien/Acrylnitril-Elastomers mit Carboxylenden (z. B. EPONTM Resin 58006 von Resolution Performance Products LLC), ein Butadien/Acrylnitril-Elastomer mit Carboxylenden (z. B. CTBN-1300X8 und CTBN-1300X13 von Noveon, Inc., Cleveland, Ohio) und ein Butadien/Acrylnitril-Elastomer mit Aminenden (z. B. ATBN-1300X16 und ATBN-1300X42 von Noveon, Inc.). Ein Beispiel für das elastomer-modifizierte Epoxidharzaddukt ist das Reaktionsprodukt eines Epoxidharzes auf Bisphenol-F-Basis und eines Butadien/Acrylnitril-Elastomers mit Carboxylenden (z. B. EPONTM Resin 58003 von Resolution Performance Products LLC).

Der Anteil der elastomermodifizierten Epoxidharze bezogen auf die Gesamtmenge an Epoxidharzen (E) kann zwischen 0 und 100 % liegen. Für Verklebungen mit besonders hohen Verklebungsfestigkeiten und geringer Dehnung werden eher niedrigere Anteile - wie beispielsweise 0 bis 15 % - gewählt. Im Gegensatz dazu werden Klebstoffe mit hohen Dehnungswerten erhalten, wenn der Anteil größer 40 %, insbesondere größer 60 % ist. Für viele Anwendungen ist ein ausgewogenes Verhältnis zwischen Verklebungsfestigkeit und Dehnung gewollt. Hier sind Anteile zwischen 20 - 60%, insbesondere 30 -50% bevorzugt. Je nach Anforderungsprofil kann es auch vorteilhaft sein, Klebstoffe mit einem Anteil bis 100 % zu realisieren.

Als weitere geeignete Vertreter für die Epoxidharze (E) können sehr vorteilhaft silanmodifizierte Epoxidharze (Es) eingesetzt werden. Dabei kann ein einzelnes silanmodifiziertes Epoxidharz (Es) oder zwei, drei oder auch mehrere silanmodifizierte Epoxidharze ($E_S$) in der härtbaren Zusammensetzung zugegen sein. Die härtbare Zusammensetzung kann auf das beziehungsweise die silanmodifizierbaren Epoxidharze ($E_S$) als härtbare Reaktivharze beschränkt sein. Neben dem beziehungsweise den Epoxidharzen ($E_S$) können aber auch weitere Epoxidharze zugegen sein, die nicht silanmodifiziert sind - beispielwiese elastomermodifizierte, insbesondere nitrilkautschukmodifizierte - Epoxidharze ($E_N$) und/oder fettsäuremodifizierte Epoxidharze ($E_F$), wie im einzelnen in dieser Schrift näher ausgeführt -, und/oder auch Reaktivharze, die keine Epoxidharze sind.

Der Anteil der silanmodifizierten Epoxidharze bezogen auf die Gesamtmenge an Epoxidharzen in der härtbaren Zusammensetzung kann zwischen 0 und 100 % liegen. Um das Aufziehen auf bestimmte silikonisierte Liner zu reduzieren, werden eher niedrigere Anteile - wie beispielsweise 5 bis 25 % - gewählt. Für eine ausgewogene Performance auch nach Feucht-Wärme-Lagerung haben sich Anteile zwischen 10 bis 50 Gew.-%, insbesondere 20 bis 40 Gew.-% als herausragend gezeigt.

Ist ein einziges silanmodifiziertes Epoxidharz zugegen, so kann dieses insbesondere ausgewählt werden aus den nachfolgend als bevorzugt beschriebenen silanmodifizierten Epoxidharzen. Sind mehrere silanmodifizierte Epoxidharze zugegen, so ist vorteilhaft zumindest eines der Epoxidharze eines der im folgenden als bevorzugte silanmodifizierten Epoxidharze beschriebenen Verbindungen. Weiter bevorzugt sind alle silanmodifizierten Epoxidharze solche, wie sie im folgenden als bevorzugt beschrieben sind.

Die chemische Modifizierung von Epoxidharzen kann zur Steuerung der Eigenschaften von Klebstoffen genutzt werden. Erfindungsgemäße modifizierte Epoxidharze sind insbesondere ausgewählt aus silanmodifizierten Epoxidharzen. Silangruppenmodifizierte Epoxidharze sind solche Epoxidharze, an die eine oder mehrere Silangruppen chemisch gebunden sind.

Prinzipiell gibt es verschiedene Wege, Silangruppen chemisch an Epoxidharze zu binden.

In einer bevorzugten Vorgehensweise wird als Epoxidharz (E) ein solches silanmodifiziertes Epoxidharz eingesetzt, das durch Dealkoholisierungs-Kondensationsreaktion zwischen einem Bisphenol-Epoxidharz und einem hydrolysierbaren Alkoxysilan erhältlich ist. Derartige Epoxidharze sind beispielsweise in der EP 1114834 A beschrieben, deren Offenbarungsgehalt durch Referenz in die vorliegende Schrift einbezogen sein soll.

Das Bisphenol-Epoxidharz kann in vorteilhafter Weise derart gewählt werden, dass es ein Epoxy-Äquivalentgewicht von mehr als 180 g/eq, und bevorzugt von weniger als 5000 g/eq, hat. Für Epoxidharze oder Epoxid-Vernetzer ist das Epoxid-Äquivalentgewicht (Abkürzung EEW) eine charakteristische und wichtige Größe. Nach DIN EN ISO 3001:1999-11 gibt das Epoxid-Äquivalentgewicht den pro Epoxid-Gruppe verbundenen Festkörper des betreffenden Stoffes in Gramm an. Es werden bevorzugt Epoxidharze mit einem EEW > 180 g/eq eingesetzt, da sonst gegebenenfalls nicht ausreichend Hydroxygruppen für die Kondensationsreaktion mit den Alkoxysilanen vorhanden sind.

In bevorzugter Weise werden als Bisphenol-Epoxidharz zur Reaktion mit dem hydrolisierbaren Alkoxysilan Verbindungen entsprechend der folgenden Formel

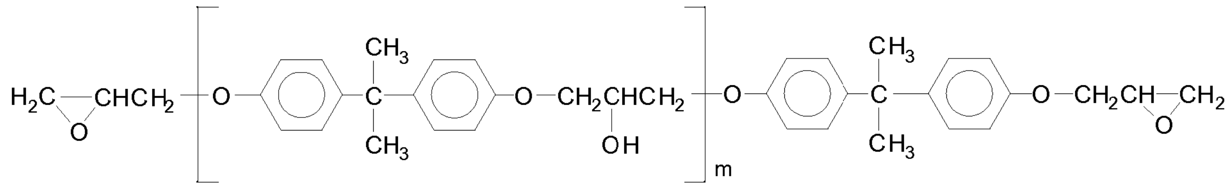

(IV)

eingesetzt. In der Regel handelt es sich dabei um eine Mischung entsprechender Verbindungen der Formel (IV) mit variierender Wiederholungszahl m der Einheit in der eckigen Klammer. Dabei wird das Bisphenol-Epoxidharz insbesondere derart gewählt, dass der Durchschnitt von m 0,07 bis 16,4, ist die zahlenmittleren Molmassen also zwischen etwa 350 g/mol und 4750 g/mol liegen.

In weiter bevorzugter Weise ist das hydrolysierbare Alkoxysilan entweder eine Verbindung entsprechend der allgemeinen Formel

$$R^{10}{}_{p}Si(OR^{11})_{4-p} \qquad (V)$$

wobei p 0 oder 1 ist, $R^{10}$ eine C-C Alkylgruppe, eine Arylgruppe oder eine ungesättigte aliphatische Kohlenwasserstoffgruppe ist, die eine direkt an ein Kohlenstoffatom gebundene funktionelle Gruppe aufweisen kann, $R^{11}$ ein Wasserstoffatom oder eine Niederalkylgruppe darstellt, und die Reste $R^{11}$ gleich oder verschieden sein können, oder das hydrolysierbare Alkoxysilan ist ein partielles Kondensat der genannten Verbindung. Die direkt an ein Kohlenstoffatom gebundene funktionelle Gruppe kann beispielsweise eine Vinylgruppe, Mercaptogruppe, Epoxygruppe, Glycidoxygrupppe usw. sein. Die Niederalkylgruppe kann beispielsweise eine unverzweigte oder eine verzweigte Alkylgruppe mit 6 oder weniger Kohlenstoffatomen sein.

Beispiele des hydrolysierbaren Alkoxysilans umfassen Tetramethoxysilan, Tetraethoxysilan, Tetrapropoxysilan, Tetraisopropoxysilan, Tetrabuthoxysilan und ähnliche Tetraalkoxysilane; Methyltrimethoxysilan, Methyltriethoxysilan, Methyltripropoxysilan, Methyltributhoxysilan, Ethyltrimethoxysilan, Ethyltriethoxysilan, n-Propyltrimethoxysilan, n-Propyltriethoxysilan, Isopropyltrimethoxysilan, Isopropyltriethoxysilan, Vinyltrimethoxysilan, Vinyltriethoxysilan, 3-Glycidoxypropyltrimethoxysilan, 3-Glycidoxypropyltriethoxysilan, 3-Mercaptopropyltrimethoxysilan, 3-Mercaptopropyltriethoxysilan, Phenyltrimethoxysilan, Phenyltriethoxysilan, 3,4-Epoxycyclohexylethyltrimethoxysilan, 3,4-Epoxycyclohexylethyltrimethoxysilan und ähnliche Trialkoxysilane; oder partielle Kondensate dieser Verbindungen.

Unter diesen Verbindungen werden Tetramethoxysilan, Tetraethoxysilan und ähnliche Tetraalkoxysilane oder partielle Kondensate davon bevorzugt. Besonders bevorzugt ist Poly(tetramethoxysilan), das ein partielles Kondensat von Tetramethoxysilan ist, dargestellt durch die Formel

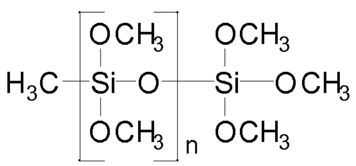

(VI)

(wobei der Durchschnitt von n 1 bis 7 beträgt). Das Poly(tetramethoxysilan), das durch die Formel (VI) dargestellt ist, kann ein Molekül enthalten, in dem n 0 ist, soweit der Durchschnitt von n 1 oder größer ist. Die zahlenmittlere Molmasse des Poly(tetramethoxysilans) beträgt vorzugsweise etwa 260 bis etwa 1200. Außerdem ist Poly(tetramethoxysilan) im Gegensatz zu Tetramethoxysilan nicht toxisch.

In einer weiteren bevorzugten Vorgehensweise wird als Epoxidharz ein solches silanmodifiziertes Epoxidharz ($E_S$) eingesetzt, das durch Modifizierung von Bisphenol-Diglycidylether mit Alkoxysilanen, die eine Epoxidgruppe tragen, erhältlich ist. Derartige silanmodifizierte Epoxide sowie deren Herstellungsverfahren ist in der US 8,835,574 A beschrieben, deren Offenbarungsgehalt ebenfalls per Referenz in diese Schrift einbezogen wird. Bei dem dort geschilderten Verfahren wird zunächst das Epoxy-Alkoxysilan in Gegenwart von Wasser teilhydrolysiert und teilkondensiert. In einem zweiten Schritt wird ein Bisphenol-Diglycidylether zugegeben und an das Siloxan-Teilkondensat gebunden.

In einer weiteren Syntheseroute von erfindungsgemäß vorteilhaft einsetzbaren silanmodifizierten Epoxidharzen (Es) werden Alkoxysilane, die eine Isocyanatgruppe enthalten, an die aliphatischen Hydroxygruppen unter Ausbildung

einer Urethangruppe gebunden.

Als Epoxidharze (E) lassen sich erfindungsgemäß weiterhin sehr vorteilhaft fettsäuremodifizierte Epoxide ($E_F$) einsetzen.

Als fettsäuremodifizierte Epoxidharze ($E_F$) werden bevorzugt Epoxidharzester, auch als Epoxyester bezeichnet, eingesetzt, also die Veresterungsprodukte von Epoxidharzen mit gesättigten oder ungesättigten Fettsäuren.

Es können ein einzelnes fettsäuremodifiziertes Epoxidharz ($E_F$) oder zwei, drei oder auch mehrere fettsäuremodifizierte Epoxidharze ($E_F$) in der härtbaren Zusammensetzung zugegen sein. Die härtbare Zusammensetzung kann auf das beziehungsweise die fettsäuremodifizierbaren Epoxidharze ($E_F$) als härtbare Reaktivharze beschränkt sein. Neben dem beziehungsweise den fettsäuremodifizierten Epoxidharzen ($E_F$) können aber auch weitere Epoxidharze zugegen sein, die nicht fettsäuremodifiziert sind - beispielwiese elastomermodifizierte, insbesondere nitrilkautschukmodifizierte - Epoxidharze ($E_N$) und/oder silanmodifizierte Epoxidharze (Es), wie im einzelnen in dieser Schrift näher ausgeführt -, und/oder auch Reaktivharze, die keine Epoxidharze sind.

Der Anteil der fettsäuremodifizierten Epoxidharze ($E_F$) bezogen auf die Gesamtmenge an insgesamt eingesetzten Reaktivharzen in der härtbaren Zusammensetzung kann bis zu 100 % betragen. Für Verklebungen mit besonders hohen Verklebungsfestigkeiten auch bei hohen Temperaturen werden eher niedrigere Anteile - wie beispielsweise 5 bis 25 Gew.-% - gewählt. Für eine gute Performance auch nach Feucht-Wärme-Lagerung haben sich Anteile zwischen 10 bis 50 Gew.-%, insbesondere 20 bis 40 Gew.-% als herausragend gezeigt. Bei den vorgenannten Anteilen ist es vorteilhaft, den Rest der Reaktivharze ebenfalls als Epoxidharze zu wählen, die dann aber nicht fettsäuremodifiziert sind.

Ist ein einziges fettsäuremodifiziertes Epoxidharz ($E_F$) zugegen, so kann dieses insbesondere ausgewählt werden aus den nachfolgend als bevorzugt beschriebenen fettsäuremodifizierten Epoxidharzen. Sind mehrere fettsäuremodifizierte Epoxidharze ($E_F$) zugegen, so ist vorteilhaft zumindest eines der Epoxidharze eines der im folgenden als bevorzugte fettsäuremodifizierten Epoxidharze beschriebenen Verbindungen. Weiter bevorzugt sind alle fettsäuremodifizierten Epoxidharze ($E_F$) solche, wie sie im folgenden als bevorzugt beschrieben sind.

Die chemische Modifizierung von Epoxidharzen kann zur Steuerung der Eigenschaften von Klebstoffen genutzt werden. Erfindungsgemäße modifizierte Epoxidharze sind insbesondere ausgewählt aus fettsäuremodifizierten Epoxidharzen. Fettsäuregruppenmodifizierte Epoxidharze sind solche Epoxidharze, an die eine oder mehrere Fettsäuren insbesondere durch Veresterungsreaktionen chemisch gebunden sind.

Als Epoxidharz-Basis für die fettsäuremodifizierten Epoxidharze ($E_F$), insbesondere Epoxyester, können insbesondere Epoxidharze vom Typ Bisphenol A/Epichlorhydrin entsprechend der oben bereits eingeführten allgemeinen Formel

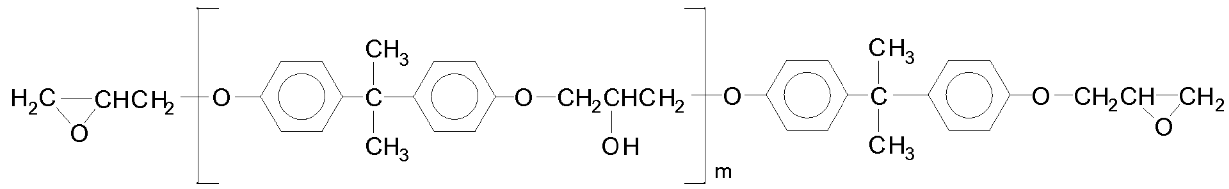

(I)

dienen. Als Basis für die fettsäuremodifizierten Epoxide wird das Bisphenol-Epoxidharz der Formel (I) insbesondere derart gewählt, dass der Durchschnitt von m = 0,07 bis 16,4 ist, die zahlenmittleren Molmassen also zwischen etwa 350 g/mol und 4750 g/mol liegen. Besonders bevorzugt werden Verbindungen der Formel 1 mit m = 2,3 bis m = 10 in reiner Form (mit ganzzahligen Werten für m) oder in Form von Mischungen eingesetzt (entsprechend zahlenmittlerer Molmassen zwischen etwa 1000 und etwa 3000 g/mol).

Sowohl die terminalen Epoxidgruppen, als auch die sekundären Hydroxygruppen von Bisphenolbasierten Epoxidharzen können mit Fettsäuren reagieren. Bei der Veresterung werden üblicherweise zunächst die beiden Epoxid-Ringe geöffnet, dann erfolgt die Reaktion der HydroxyGruppen.

Hierbei ist jede Epoxygruppe äquivalent zu 2 Hydroxygruppen, da nach der Reaktion einer Säuregruppe mit einem Epoxid ein β-Hydroxyester entsteht. Diese β-Hydroxygruppen können auch mit Fettsäuren reagieren. Die Herstellung erfolgt typischerweise bei Temperaturen von 240 - 260°C unter Schutzgasatmosphäre, bevorzugt unter azeotropen Bedingungen, um das freiwerdende Reaktionswasser zu entfernen. Optional wird die Reaktion durch Zugabe von Katalysatoren wie beispielsweise Calcium oder Zinkseifen von zum Beispiel Fettsäuren wie Stearinsäure beschleunigt. Je nach gewünschter Eigenschaft werden 40 bis 80 % der verfügbaren funktionellen Gruppen des Epoxidharzes mit Fettsäuren umgesetzt.

Ein Epoxidharz vom Typ n (entspricht der Anzahl freier OH-Gruppen entlang der Kette) kann im Mittel theoretisch maximal n + 4 Fettsäure-Moleküle pro Epoxidharz-Molekül binden (Veresterungsgrad 100%). Demgemäß ist bei Epoxidharzestern die "Öllänge" wie folgt definiert:

kurzölig: Veresterungsgrad 30-50 %;
mittelölig: Veresterungsgrad 50-70%;
langölig: Veresterungsgrad 70-90%.

Als Fettsäuren für die Veresterung sind beispielsweise Kokosölfettsäure, Ricinenfettsäure (Fettsäure des dehydratisierten Ricinusöls), Leinölfettsäure, Sojaölfettsäure oder Tallölfettsäure erfindungsgemäß gut geeignet.
Weitere erfindungsgemäß vorteilhafte Fettsäuren sind $\alpha$-Linolensäure, Stearidonsäure, Eicosapentaensäure, Docosahexaensäure, Linolsäure, $\gamma$-Linolensäure, Dihomogammlinolensäure, Arachidonsäure, Docosa-7,10,13,16-tetrain-1-Säure, Palmitoleinsäure, Vaccensäure, Ölsäure, Elaidinsäure, Gadoleinsäure, 13-Eicosensäure, Erucasäure, Nervonsäure, Stearinsäure, Mead'sche Säure.
Auch Dimere und Oligomere von ungesättigten Fettsäuren sind einsetzbar, beispielweise die Dimeren von Tallölfettsäuren.

Herstellverfahren

Die erfindungsgemäß eingesetzten Klebemassen lassen sich grundsätzlich nach den dem Fachmann bekannten Verfahren herstellen.
Als ein sehr schonendes Verfahren, mit dem sich selbst schwierig verarbeitbare Rohstoffe wie nicht-thermoplastische Elastpomere - beispielsweise Nitrilkautschuke -verarbeiten lassen, ist die Extrusion, insbesondere unter Verwendung eines Planetwalzenextruders, zu nennen. Hiermit gelingt selbst die Einarbeitung der sensiblen Komponenten der härtbaren Zusammensetzung, wie Reaktivharze und Härter, ohne dass es zu einer Vorab-Reaktion dieser Komponenten oder zu sonstigen Problemen im Prozess kommt. Eine solche Vorab-Reaktion würde das Klebeband bereits härten oder zumindest teilhärten und dem Ziel eines lagerfähigen, transportablen Klebebandes, das erst nach Applikation ausgehärtet werden soll, entgegenstehen. Planetwalzenextruder als kontinuierlich arbeitendes Aggregat sind seit längerer Zeit bekannt und fanden zuerst Einsatz in der Verarbeitung von Thermoplasten wie zum Beispiel PVC, wo sie hauptsächlich zum Beschicken der Folgeeinheiten wie zum Beispiel Kalander oder Walzwerke verwendet wurden. Durch ihren Vorteil der großen Oberflächenerneuerung für Material- und Wärmeaustausch, mit dem sich die über Friktion eingebrachte Energie rasch und effektiv abführen lässt, sowie der geringen Verweilzeit und des engen Verweilzeitspektrums hat sich ihr Einsatzgebiet in letzter Zeit u.a. auch auf Compoundierprozesse erweitert, die eine besonders temperaturkontrollierte Fahrweise erfordern.
Planetwalzenextruder bestehen aus mehreren Teilen, nämlich einer umlaufenden Zentralspindel, einem die Zentralspindel im Abstand umgebenden Gehäuse mit einer Innenverzahnung und Planetspindeln, welche in dem Hohlraum zwischen Zentralspindel und innen verzahntem Gehäuse wie Planeten um die Zentralspindel umlaufen. Soweit im Folgenden von einer Innenverzahnung des Gehäuses gesprochen wird, so schließt das auch ein mehrteiliges Gehäuse mit einer Buchse ein, welches die Innenverzahnung des Gehäuses bildet. Im Planetwalzenextruder kämmen die Planetspindeln sowohl mit der Zentralspindel als auch mit dem innen verzahnten Gehäuse. Zugleich gleiten die Planetspindeln mit dem in Förderrichtung weisenden Ende an einem Anlaufring. Die Planetwalzenextruder besitzen im Vergleich zu allen anderen Extruderbauarten eine extrem gute Mischwirkung, jedoch eine viel geringere Förderwirkung.
Planetwalzenextruder gibt es je nach Hersteller in verschiedenen Ausführungen und Größen. Je nach gewünschter Durchsatzleistung liegen die Durchmesser der Walzen¬zylinder typischerweise zwischen 70 mm und 400 mm.
Planetwalzenextruder haben in der Regel einen Füllteil und einen Compoundierteil.
Der Füllteil, in der Regel entsprechend einer Füllzone, besteht aus einer Förderschnecke, auf die sämtliche Feststoffkomponenten - vorliegenden insbesondere die nicht-thermoplastsichen Elastomere und gegebenenfalls weitere Komponenten - kontinuierlich dosiert werden. Die Förderschnecke übergibt das Material dann dem Compoundierteil. Der Bereich des Füllteils mit der Schnecke ist vorzugsweise gekühlt, um Anbackungen von Materialien auf der Schnecke zu vermeiden. Es gibt aber auch Ausführungsformen ohne Schneckenteil, bei denen das Material direkt zwischen Zentral- und Planetenspindeln aufgegeben wird. Für die Wirksamkeit des erfindungsgemäßen Verfahrens ist dies aber nicht von Bedeutung. Auch die Zentralspindel kann vorzugsweise gekühlt sein.
Der Compoundierteil besteht üblicherweise aus einer angetriebenen Zentralspindel und mehreren Planetenspindeln, die innerhalb eines Walzenzylinders mit Innenschrägverzahnung um die Zentralspindel umlaufen. Die Drehzahl der Zentralspindel und damit die Umlaufgeschwindigkeit der Planetenspindeln kann variiert werden und ist damit ein wichtiger Parameter zur Steuerung des Compoundierprozesses. Der Compoundierteil kann durch eine einzige Compoundierzelle oder durch eine Abfolge mehrerer - insbesondere durch Anlaufringe und gegebenenfalls zusätzliche Einspritz- oder Dispergierringe - voneinander getrennter Compoundierzonen gebildet werden. Zahl und Anordnung der

Planetenspindeln kann dabei von Compoundierzone zu Compoundierzone variieren. Typischerweise wird der Compoundierteil vorzugsweise zumindest aus zwei, besonders bevorzugt aber aus drei oder vier gekoppelten Walzenzylindern bestehen, wobei jeder Walzenzylinder einen oder mehrere separate Temperierkreise aufweisen kann. Das umgebende Gehäuse hat in zeitgemäßer Ausbildung einen Doppelmantel. Der Innenmantel wird durch eine Buchse, die mit der Innenverzahnung versehen ist, gebildet. Zwischen Innen- und Außenmantel ist die wichtige Kühlung des Planetwalzenextruders vorgesehen.

Die Planetenspindeln bedürfen keiner Führung in Umfangsrichtung. Durch die Verzahnung ist gewährleistet, dass der Abstand der Planetenspindeln in Umfangsrichtung gleich bleibt. Es kann von einer Eigenführung gesprochen werden

Die Materialien werden zwischen Zentral- und Planetenspindeln beziehungsweise zwischen Planetenspindeln und Schrägverzahnung des Walzenteils umgewälzt, so dass unter Einfluss von Scherenergie und äußerer Temperierung die Dispergierung der Materialien zu einem homogenen Compound erfolgt.

Die Anzahl der in jedem Walzenzylinder umlaufenden Planetenspindeln kann variiert und somit den Erfordernissen des Prozesses angepasst werden. Die Spindelanzahl beeinflusst das freie Volumen innerhalb des Planetwalzenextruders, die Verweilzeit des Materials im Prozess und bestimmt zudem die Flächengröße für den Wärme- und Materialaustausch. Die Anzahl der Planetenspindeln hat über die eingeleitete Scherenergie Einfluss auf das Compoundierergebnis. Bei konstantem Walzenzylinderdurchmesser lässt sich mit größerer Spindelanzahl eine bessere Homogenisier- und Dispergierleistung beziehungsweise ein größerer Produktdurchsatz erzielen. Zum Erzielen eines guten Verhältnisses von Compoundiergüte zu Produktrate sind vorzugsweise mindestens die Hälfte oder sogar mindestens 3/4 der möglichen Anzahl an Planetenspindeln einzusetzen.

Die maximale Anzahl an Planetenspindeln, die sich zwischen Zentralspindel und Walzenzylinder einbauen lässt, ist abhängig vom Durchmesser des Walzenzylinders und vom Durchmesser der verwendeten Planetenspindeln. Bei Verwendung größerer Walzendurchmesser, wie sie zum Erzielen von Durchsatzraten im Produktionsmaßstab notwendig sind, beziehungsweise kleinerer Durchmesser für die Planetenspindeln können die Walzenzylinder mit einer größeren Anzahl an Planetenspindeln bestückt werden. Typischerweise werden bei einem Walzendurchmesser von D=70 mm bis zu sieben Planetenspindeln verwendet, während bei einem Walzendurchmesser von D=200 mm zum Beispiel zehn und bei einem Walzendurchmesser von D=400 mm beispielsweise 24 Planetenspindeln verwendet werden können.

Selbstverständlich kann jeder Walzenzylinder hinsichtlich Anzahl und Art der Planetenspindeln unterschiedlich bestückt sein und so den jeweiligen rezepturiellen und verfahrenstechnischen Anforderungen angepasst sein.

Erfindungsgemäß ist es gelungen, lagerstabile härtbare Zusammensetzungen auf Epoxidbasis zur Verfügung zu stellen, die zur Verwendung als Klebstoffe in Klebebänder hervorragend geeignet sind und mit denen es gelingt, auch sehr dicke Klebebänder zu realisieren. Die hergestellten Produkte weisen eine sehr gute Adhäsion insbesondere zu Glasoberflächen auf. Durch die gewählten Komponenten ist es gelungen, die Löslichkeit der eingesetzten Härter in den anderen Komponenten zu reduzieren oder gänzlich zu vermeiden, wodurch man sehr lagerstabile Produkte erhält, die gut transportierbar und lagerbar sind und auch bei der Anwendung beim Kunden - sogar nach längerer Lagerzeit - ihre volle Verklebungsleistung gewährleisten.

Die Aushärtung der erfindungsgemäßen Klebstoffe beziehungsweise Klebebänder nach Applikation kann vorteilhaft bei Temperaturen zwischen 120 °C und 200 °C für 10 bis 120 Minuten erfolgen. Die exakten Bedingungen richten sich nach dem verwendeten Härter und dem gegebenenfalls verwendeten Beschleuniger und der verwendeten Menge an Beschleuniger. Typischerweise werden Beschleuniger zwischen 0.5 phr und 5 phr eingesetzt, wobei phr sich auf die Menge an verwendeten Epoxidharzen bezieht. Beispielhafte Aushärtebedingungen sind 30 Minuten bei 180 °C, 30 Minuten bei 160 °C, 35 Minuten bei 145 °C, 60 Minuten bei 130 °C, 120 Minuten bei 120 °C.

Erfindungsgemäß können sehr dicke Klebebänder realisiert werden. Die Darreichung an sich hochviskoser Klebstoffe in Form stabiler Filme - etwa durch die Einbettung des Reaktivklebstoffs in eine polymere Filmbildnermatrix - eröffnet mit den erfindungsgemäßen Klebemassen den Zugang zu sehr lagerstabilen Klebefilmen in einer hohen Dimensionsvielfalt.

So ist es möglich, Klebefilme in sehr dünner Form - beispielweise von wenigen μm Dicke - über übliche Klebebanddicken, etwa mit Klebstoffschichten von 25 μm bis zu 100 μm Dicke - wie etwa 50 μm dicken Klebstoffschichten -, bis hin zu Klebebändern mit sehr dicken Klebstoffschichten von über 100 μm, bevorzugt von über 200 μm, sogar von 300 μm oder mehr, 500 mm oder mehr, 1 mm oder mehr bis hin zu Klebmassenschichten im Bereich von einigen Millimetern und sogar Zentimetern anzubieten, und zwar sowohl als Einschicht-Klebefilme (Transfer-Klebebänder) als auch als ein- oder doppelseitig klebenden Mehrschicht-Klebebändern, insbesondere auch mit einem Trägermaterial, anzubieten.

Referenzmethoden

Die jeweiligen Parameterangaben im Rahmen dieser Schrift beziehen sich auf die nachfolgenden Referenz-Bestimmungsmethoden, sofern im Einzelnen nichts anderes spezifiziert oder angegeben ist.

Viskosität

Ein Maß für die Fließfähigkeit des fluiden Beschichtungsmaterials ist dynamische Viskosität. Die dynamische Viskosität wird nach DIN 53019 bestimmt. Als Fluid wird eine Viskosität von weniger als 108 Pa·s bezeichnet. Die Viskosität wird in einem Zylinderrotationsviskosimeter mit einer Standardgeometrie nach DIN 53019-1 bei einer Messtemperatur von 23 °C und einer Schergeschwindigkeit 1 s-1 gemessen.

Molmasse

Angaben zur zahlenmittleren Molmasse Mn beziehungsweise zur gewichtsmittleren Molmasse Mw beziehen sich auf die Messung mittels Gelpermeationschromato¬graphie (GPC) wie folgt: Als Eluent wurde THF (Tetrahydrofuran) mit 0,1 Vol. % Trifluoressigsäure eingesetzt. Die Messung erfolgte bei 25 °C. Als Vorsäule wurde PSS-SDV, 5 μ, $10^3$ Å, ID 8,0 mm x 50 mm verwendet. Zur Auftrennung wurden die Säulen PSS-SDV, 5 μ, $10^3$ sowie 105 und 106 mit jeweils ID 8,0 mm x 300 mm eingesetzt. Die Probenkonzentration betrug 4 g/l, die Durchflussmenge 1,0 ml pro Minute. Es wurde gegen Polystyrol-Standards gemessen.

Erweichungstemperaturen von Polymeren beziehungsweise Harzen

Die Erweichungstemperatur wird, sofern nicht im einzelnen anders angegeben, nach der einschlägigen Methodik durchgeführt, die als Ring and Ball' bekannt ist und nach ASTM E28 standardisiert ist.

Zur Bestimmung der Erweichungstemperatur kommt ein Ring-Kugel-Automat HRB 754 der Firma Herzog zum Einsatz. Die zu vermessenden Proben - etwa das Harz oder das Elastomer - werden zunächst fein gemörsert. Das resultierende Pulver wird in einen Messingzylinder mit Bodenöffnung (Innendurchmesser am oberen Teil des Zylinders 20 mm, Durchmesser der Bodenöffnung des Zylinders 16 mm, Höhe des Zylinders 6 mm) gefüllt und auf einem Heiztisch geschmolzen. Die Befüllmenge wird so gewählt, dass die Probe nach dem Schmelzen den Zylinder ohne Überstand voll ausfüllt.

Der resultierende Probekörper wird samt Zylinder in die Probehalterung des HRB 754 eingelegt. Zur Befüllung des Temperierbads wird Glycerin verwendet, sofern die Erweichungstemperatur zwischen 50 °C und 150 °C liegt. Bei niedrigeren Erweichungstemperaturen kann auch mit einem Wasserbad gearbeitet werden. Die Prüfkugeln haben einen Durchmesser von 9,5 mm und wiegen 3,5 g. Entsprechend der HRB 754 Prozedur wird die Kugel oberhalb des Probekörpers im Temperierbad angeordnet und auf dem Probekörper abgelegt. 25 mm unter dem Zylinderboden befindet sich eine Auffangplatte, 2 mm über dieser eine Lichtschranke. Während des Messvorgangs wird die Temperatur mit 5 °C/min erhöht. Im Temperaturbereich der Erweichungstemperatur beginnt sich die Kugel durch die Bodenöffnung des Zylinders zu bewegen, bis sie schließlich auf der Auffangplatte zum Stehen kommt. In dieser Position wird sie von der Lichtschranke detektiert und zu diesem Zeitpunkt die Temperatur des Temperierbads registriert. Es findet eine Doppelbestimmung statt. Die Erweichungstemperatur ist der Mittelwert aus den beiden Einzelmessungen.

Weitere Referenzmethoden ergeben sich aus den Testmethoden im Experimentellen Teil.

## Experimenteller Teil

In einigen Beispielen des experimentellen Teils wurde ein Planetwalzenextruder der Firma ENTEX Rust&Mitschke verwendet. Die Planetwalzenextruder-Konfiguration, die in den Beispielen verwendet wird, zeigt Figur 1, die Figur dient gleichzeitig dazu, den grundsätzlichen Aufbau eines Planetwalzenextruders beispielhaft zu illustrieren.

Der Planetwalzenextruder hat einen Füllteil (2) und einen Compoundierteil (5), der aus vier hintereinander geschalteten Walzenzylindern (5a bis 5d), jeweils entsprechend einer Compoundierzone, besteht. Der Walzenzylinder 5a entspricht dabei der ersten Compoundierzone. Innerhalb eines Walzenzylinders tauschen die durch die Umdrehung der Zentralspindel (6) angetriebenen Planetenspindeln (7) die Materialien zwischen Zentralspindel (6) und Planetenspindeln (7) beziehungsweise zwischen Planetenspindeln (7) und der Wandung (10) des Walzenzylinders (5a bis 5d) ab.

Am Ende jedes Walzenzylinders (5a bis 5d) befindet sich ein Anlaufring (8a bis 8d), der die Planetenspindeln (7) ortsfest hält.

Über die Füllöffnung (1) können Komponenten wie zum Beispiel Elastomere, Füllstoffe, Antioxidantien usw. auf die Förderschnecke (3) des Füllteils (2) des Planetwalzenextruders dosiert werden. Die Förderschnecke (3) übergibt die Materialien danach auf die Zentralspindel (6) des ersten Walzenzylinders, also der ersten Compoundierzone (5a). Zur Verbesserung des Materialeinzugs zwischen Zentralspindel (6) und Planetenspindeln (7) werden bei den Experimenten im ersten Walzenzylinder (5a) vier lange und drei kurze Planetenspindeln (7) verwendet, generell sind auch andere Anordnungen realisierbar.

Die innen hohle Förderschnecke (3) und Zentralspindel (6) sind kraftschlüssig miteinander verbunden und besitzen einen gemeinsamen Temperierkreis. Jeder Walzenzylinder (5a bis 5d) des Compoundierteils (5) verfügt über eine unabhängige Temperierung. Über einen weiteren Temperierkreis kann das Füllteil (2) gekühlt werden. Als Temperiermedium kann Wasser verwendet werden.

Die Dosierung insbesondere der zum Aufschluss verwendeten Epoxidharze, aber auch anderer Komponenten kann beispielsweise über den Einspritzring (4) vor dem ersten Walzenzylinder (5a) beziehungsweise über die mit Bohrungen versehenen Anlaufringe (8a bis 8d) oder in Kombination beider Möglichkeiten erfolgen. Die Walzenzylinder (5a bis 5d) sind in ungefähr der Mitte der Zylinder mit einer Öffnung für Seitenbeschickung versehen. Über diese können bei Bedarf über Seitenbeschicker (9a bis 9d) flüssige oder feste Komponenten - wie insbesondere weitere Reaktivharze und Vernetzer - zugegeben werden.

Die Temperatur der Haftklebemasse wird mittels Einstechfühler im Produktaustritt (11) ermittelt.

Lagerfähigkeit

Die Lagerfähigkeit (Lf) der Klebebänder wurde über DSC bestimmt. Dazu wird die Reaktionswärme von Mustern, die 10d bei 40°C ($\Delta H_{10d40}$) und 10d bei 60°C ($\Delta H_{10d60}$) gelagert wurden, bestimmt und in Vergleich zur Reaktionswärme einem frisch hergestellten Musters ($\Delta H_{frich}$) gesetzt.

$$Lf_{40} = \Delta H_{10d40} / \Delta H_{frisch} \quad \text{und} \quad Lf_{60} = \Delta H_{10d60} / \Delta H_{frisch}$$

Die Lagerfähigkeit entspricht somit der prozentualen Restreaktivität der reaktiven Klebebänder. In manchen Fällen war die gemessene Reaktionswärme der gelagerten Proben minimal größer, als die des frischen Musters. Die Lagerfähigkeit ist in diesen Fällen auf 1 gesetzt.

Kipp-Schertest

Vergleiche hierzu Figur 2. Auf einem Glassubstrat (2.1) wird eine Stahlform (2.2) mit plattenförmiger, ebener Grundfläche; Kantenlänge ca. 2,5 cm x 2 cm; und anderseitiger Ausformung zum Befestigen eines Hebels (2.3), die auf der ebenen Grundfläche zunächst mit einer 2,0 cm x 2,0 cm und 500 µm dicken Klebmasseschicht (2.4) ausgerüstet wurde, blasenfrei aufgeklebt und für eine Minute mit einem 2 kg Gewicht angedrückt. Die Aushärtung der Klebemasse (2.4) erfolgte bei 145 °C in 30 Minuten; nachfolgend erfolgte eine Feucht-Wärmelagerung in einem Klimaschrank bei 65 °C und 90 % r.F. Die Bewertung des Kipp-Schertests erfolgte in einer Zwick-Prüfmaschine mit 20 kN Prüfkopf. Auf die verklebte Stahlform (2.2) wird dazu ein Hebel (2.3) wie in Figur 2 dargestellt, befestigt. Die Maschine drückt den Hebel nach unten (Druck dargestellt durch Pfeil 2.5), bis die Glas-Stahl Verklebung versagt.

Das Ergebnis der Messung ist das Bruchbild. Adhäsiv (A) bedeutet, dass die Klebmasse (2.4) rückstandsfrei von der Glasplatte (2.2) entfernt wurde. Kohäsiv (K) bedeutet, dass sowohl auf der ebenen Grundfläche der Stahlform (2.2), als auch auf dem Glassubstrat (2.1) Rückstände der Klebmasse (2.4) zu finden sind.

Thermoplastizität

Die Bestimmung der Thermoplastizität beziehungsweise Nicht-Thermoplastizität erfolgte auf einer Laborheizplatte der Firma Ikamag. Auf die Heizplatte wurde eine quadratische Stahlplatte entsprechend der Spezifizierung gemäß ISO 29862:2007, Abschnitt 5.3.3, aber mit eine Kantenlänge, dass die Heizplatte komplett abgedeckt war, und einer Dicke von 1,1 mm gelegt. Die Temperatur der der Heizplatte abgewandten Oberfläche der Stahlplatte wird mit einem Temperaturfühler gemessen.

Das zu testende Polymer (ein Würfel von ca. 2 cm x 2 cm x 2 cm Höhe, Breite, Tiefe) oder im Falle von Granulaten ein Granulatkügelchen wurde mittig auf die freie Oberfläche der Stahlplatte gelegt.

Es wurden drei Testreihen mit jeweils identischen Mustern des zu testenden Polymers gefahren, bei denen die Stahlplatte bei einer Testreihe auf eine Temperatur von 150 °C, bei der zweiten Testreihe auf eine Temperatur von 200 °C und bei der dritten Testreihe auf eine Temperatur von 250 °C erhitzt wurde (Heizrate jeweils ca. 1 °C pro Sekunde, Bestimmung der Temperatur mittels des Temperaturfühlers). Die Probe wurde für 1 Minute auf der jeweiligen Endtemperatur gehalten und die Stahlplatte dann auf einen Winkel von 60 ° (bezogen auf den planaren, horizontalen Untergrund) geneigt.

Die gemessene Probe gilt als nicht thermoplastisch zumindest bis zu der jeweiligen Temperatur, wenn sie bei der Neigung von selbst von der Platte fällt/rollt.

Für die gemessene Probe gilt, dass sie thermoplastisches Verhalten bereits unterhalb einer jeweiligen Temperatur aufweist, wenn sie bei dem Test zu der jeweiligen Temperatur für mindestens 2 Sekunden an der Platte anhaftet

- und somit durch ein zumindest teilweises Aufschmelzen aufgeflossen ist -, wenn sie also innerhalb des Zeitraums von 2 Sekunden also nicht von selbst von der Platte fällt/rollt.

Erweichungspunkt der Beschleuniger

Es wurde ein Schmelzpunkt-Analysator verwendet. Dazu wird der Beschleuniger in eine Kapillare gefüllt und mit einer Heizrate von 20K/min aufgeheizt. Durch ein Vergrößerungsglas lässt sich optisch der Erweichungspunkt bestimmen. Für Epoxy-Amin-Addukte wird die Temperaturuntergrenze gewählt, bei der das Pulver erkennbar beginnt, seine Form zu verändern.

Verwendete Rohstoffe:

| | |
|---|---|
| Breon N41H80 | Heißpolymerisierter Nitril-Butadien-Kautschuk mit einem Acrylnitrilanteil von 41 Gew.-% und einer Mooney-Viskosität 70 bis 95. Nicht-thermoplastisch bis 250 °C nach Testmethode für Thermoplastizität. Hersteller/Anbieter Zeon Chemicals. |
| Araldite ECN 1273 | Festes Epoxy-Cresol-Novolak mit einer Erweichungstemperatur 68 bis 78 °C und einem EEW von 217 bis 233 g/eq. Hersteller/Anbieter Huntsman. |
| Araldite GT7072 | Festes difunktionelles Bisphenol-A / Epichlorhydrin Epoxidharz mit einem EEW von 570 bis 595 g/eq und einer Erweichungstemperatur von 82 bis 90 °C. Hersteller/Anbieter Huntsman. |
| Epon 828 | Difunktionelles Bisphenol-A / Epichlorhydrin Flüssigepoxid mit einem Gewicht pro Epoxid von 185 bis 192 g/eq. Viskosität bei 25 °C von 12 bis 14 Pa s. Hersteller/Anbieter Momentive. |
| Struktol PolyDis 3611 (= Struktol PD3611) | Nitrilkautschukmodifiziertes Epoxidharz auf der Basis von Bisphenol-F-Diglycidylether mit einem Elastomergehalt von 40 Gew.-% und einem Gewicht pro Epoxid von 550 g/eq Viskosität bei 25 °C von 10000 Pa s. Hersteller/Anbieter Schill + Seilacher. |
| KSR-177 | Gemäß Sicherheitsdatenblatt des Herstellers (*MSDS No. : FS- [Rev. 6]*, issued 2010-02-01, Rev. 62013-03-07) ein fettsäuremodifiziertes Epoxidharz mit einem Epoxyäquivalent von 190 bis 220 g/eq. Viskosität bei 25 °C von 9 bis 15 Pa s. Hersteller/Anbieter Kukdo Chemical Co Ltd. |
| Reaktivharz 1 | Fettsäuremodifiziertes Epoxidharz hergestellt aus Epon 828 und Sylfat FA1. Das Reaktionsprodukt wurde mit Epon 828 abgemischt und auf einen EEW von 200 g/eq eingestellt. |
| Reaktivharz 2 | Silanmodifiziertes Epoxidharz hergestellt aus 3-Isocyanatopropyltriethoxy-silan (CAS: 24801-88-5) und Araldite GT7072. EEW = 650 bis 750 g/eq. |
| Dyhard 100S | Latenter Härter für Epoxidsysteme bestehend aus mikronisiertem Dicyandiamid bei dem 98 % der Partikel kleiner 10 μm sind. Hersteller/Anbieter AlzChem. |
| Ajicure PN-40 | Epoxy-Imidazol-Addukt mit einer Erweichungstemperatur von 105 °C bis 125 °C (verwendet wurde eine Charge mit 107 °C) und einer mittleren Partikelgröße von 6 bis 16 μm. Hersteller/Anbieter Ajinomoto. Laut Sicherheitsdatenblatt ist es ein Reaktionsprodukt aus einem Epoxidharz, einem Imidazol und einer Carbonsäure. |
| Ajicure PN-50 | Epoxy-Imidazol-Addukt mit einer Erweichungstemperatur von 100 °C bis 125 °C (verwendet wurde ein Charge mit 116°C) und einer mittleren Partikelgröße von 7,5 bis 16,5 μm. Reaktionsprodukt aus einem Epoxidharz, einem Imidazol und einer Carbonsäure (gemäß Sicherheitsdatenblatt des Herstellers). Hersteller/Anbieter Ajinomoto. |
| Ajicure MY-25 | Reaktionsprodukt aus einem Amin und einem Epoxidharz (Epoxy-Amin-Addukt), mit einer Erweichungstemperatur von 110 °C bis 150 °C (verwendet wurde eine Charge mit 128°C) und einer mittleren Partikelgröße von 7,5 bis 17,5μm. Hersteller/Anbieter Ajinomoto. |
| Ancamine 2014FG | Modifiziertes aliphatisches Polyaminaddukt. 90 % der Partikel sind kleiner als 6 μm. Der Erweichungspunkt liegt unter 100 °C. Hersteller/Anbieter Airproducts. |
| Technicure LC-80 | Verkapseltes modifiziertes Imidazol mit einer Erweichungstemperatur von 90 bis 110 °C. Verwendet wurde eine Charge mit 100 °C. Laut Distributeur (Brenntag) handelt es sich um ein Imidazol, Epoxy Amin Addukt. Hersteller/Anbieter ACCI Specialty Materials. |
| Epikure P-101 | Epoxy-Imidazol-Addukt mit einem Erweichungsbereich zwischen 85 °C bis 105 °C (verwendet wurde eine Charge mit 89 °C. hersteller/Anbieter Hexion. |
| Sylfat FA1 | Tallölfettsäuren. Hersteller/Anbieter Firma Kraton. |

Herstellung modifiziertes Reaktivharz 1

In einem Reaktionsgefäß wurden 76 g Epon 828 mit 56 g Sylfat FA1 vermischt und auf 250 °C erhitzt. Das entstandene Wasser wurde abdampfen gelassen. Das Produkt wurde ohne weitere Aufreinigung eingesetzt.

Herstellung modifiziertes Reaktivharz 2

In einem Rundkolben wurden unter Stickstoff-Atmosphäre 116 g Araldite GT7072 in 500 g Butanon gelöst. Über einen Troptrichter wurden 24.7 g 3-(Triethoxysilyl)propyl isocyanat langsam in die gerührte Lösung getropft. Die Reaktion wurde zum Sieden gebracht und 1h Stunde unter Rückfluss gerührt. Dann wurde die Kühlung entfernt und das Lösungsmittel, sowie das entstandene Ethanol abgedampft. Das Produkt wurde ohne weitere Aufreinigung eingesetzt.

| Beispiel: | K1 | K2 | K3 | K4 | K5 | K6 | K7 | K8 | V1 | V2 |
|---|---|---|---|---|---|---|---|---|---|---|
| | Gew. teile | Gew. teile | Gew. teile | Gew. teile | Gew. teile | Gew. teile | Gew. teile | Gew. teile | Gew. teile | Gew. teile |
| Breon N41H80 | 30 | 30 | 30 | 30 | 30 | 30 | 30 | 30 | 30 | 30 |
| Epon 828 | 20 | 20 | | | | 20 | 20 | 20 | 20 | 20 |
| Araldite ECN 1273 | 30 | 30 | 30 | 30 | 30 | 30 | 30 | 30 | 30 | 30 |
| Struktol PD3611 | 20 | 20 | 20,0 | 20,0 | 20,0 | 20 | 20 | 20 | 20 | 20 |
| KSR-177 | | | 20 | | | | | | | |
| Reaktivharz 1 | | | | 20 | | | | | | |
| Reaktivharz 2 | | | | | 20 | | | | | |
| Dyhard 100S | | 3,61 | 3,47 | 3,51 | 2,58 | 3,61 | 3,61 | 3,61 | 3,61 | 3,61 |
| Ajicure PN-40 | | | | | | | 2,1 | | | |
| Ajicure PN-50 | 14 | 2,1 | 2,1 | 2,1 | 2,1 | | | | | |
| Ajicure MY-25 | | | | | | 2,1 | | | | |
| Ancamine 2014FG | | | | | | | | | 2,1 | |
| Technicure LC-80 | | | | | | | | 2,1 | | |
| Epikure P-101 | | | | | | | | | | 0,35 |

Herstellung der Klebebänder

Die Klebemassen wurden in einem Messkneter der Firma Haake bei Füllgraden zwischen 70 % bis 80 % hergestellt. Dazu wurde der Nitrilkautschuk und Struktol PD3611 vorgelegt und so lange bei 60 °C mit Walzenschaufeln geknetet, bis sich ein konstantes Drehmoment eingestellt hatte. Dann wurden die weiteren Rohstoffe zugegeben und geknetet. Zum Schluss wurden der Härter und gegebenenfalls der Beschleuniger zugegeben und ca. 5 Minuten bei ca. 80 °C Massetemperatur geknetet.

Die Klebmasse wurde in einer Vakuumpresse zu 500 µm dicken Transferklebefilmen blasenfrei zwischen zwei silikonisierten PET Folien verpresst. K1 als einzige Klebmasse ohne Dyhard 100S wurde für 15 zusätzlich einmal für 15 Minuten bei 95° C geknetet, um die thermische Belastung des Extrusionsprozesses zu simulieren. Nach dem Pressvorgang war auch dieser Klebefilm weißlich, was zeigt, dass der Beschleuniger ungelöst partikulär den Knetprozess übersteht.

K2 und K3 wurden zusätzlich auch in einem kontinuierlichen Prozess hergestellt und finden sich in der Bewertungstabelle als K2* und K3* wieder.

Verwendet wurde ein Planetwalzenextruder der Firma Entex Rust & Mitschke mit vier gekoppelten Walzenzylindern, die einen Innendurchmesser von 70 mm aufwiesen. Die ersten beiden Walzenzylinderwaren mit jeweils 7 Planetenspindeln bestückt, die zwei nachfolgenden mit jeweils 6 Planetenspindeln. Der Dispergierring nach dem ersten Walzenzylinder hatte einen freien Querschnitt von 38 mm, der Dispergierring nach dem zweiten Walzenzylinder einen von 34,5 mm und der Dispergierring nach dem dritten Walzenzylinder einen von 34 mm. In der vorliegenden Ausführungsform des Planetwalzenextruders weist das Füllteil eine Förderschnecke auf, auf die das Material dosiert werden kann. Die verwendeten Prozessparameter sind im Folgenden detailliert beschrieben.

Stromabwärts des Planetwalzenextruders wurde ein Doppelschneckenextruder (DSE) als Entgasungsextruder eingesetzt (KraussMaffei Berstorff, 42 mm Schneckendurchmesser, 36 L/D), wobei in einer Entgasungszone ein Vakuum von 200 mbar angelegt wurde. Der Entgasungsextruder wurde durchgehend mit 60 °C temperiert, bei einer Drehzahl von 90 U/min. Der Härter wurde im ersten Drittel des DSE zudosiert. Wurden Härter und Beschleuniger verwendet, so wurden Mischungen ("Batch") aus Dyhard 100S und dem entsprechenden Beschleuniger im entsprechenden Mischungsverhältnis hergestellt und ebenfalls im ersten Drittel im DSE zudosiert. Der angegebene Massestrom bezieht sich demnach auf eine Mischung aus Härter und Beschleuniger.

Die Austrittstemperatur der Klebmasse aus dem Planetwalzenextruder lag im Bereich von 85 °C und 95 °C. Nach Durchgang durch den nachgeschalteten Doppelschneckenextruder lagen die Temperaturen auf vergleichbaren Niveau.

| **Experiment** | **Massestrom Zone 1 / kg/h** | | **Massestrom Zone 2 /kg/h** | **Massestrom Zone 3 / kg/h** | | **Massestrom Entgasungs DSE / kg/h** |
|---|---|---|---|---|---|---|
| | Breon N41H80 | Araldite ECN 1273 | Struktol PD3611 | | Epon828 / KSR-177 | Dyhard 100S-Beschleuniger-Batch |
| K2* bzw K3* | 7,5 | 7,5 | 5 | | 5 | 1,43 |

Für die obigen Beispiele wurden folgende Verfahrensparameter gewählt:

| | **Zone 1** | **Zone 2** | **Zone 3** | **Zone 4** |
|---|---|---|---|---|
| Anzahl Planeten | 7 | 7 | 6 | 6 |
| $T_{Walzenzylinder}$ / °C | 80 | 70 | 60 | 50 |
| $T_{Zentralspindel}$ / °C | 30 | 30 | 30 | 30 |
| Durchmesser Dispergierring / mm | | 38 | 34,5 | 34 |
| Drehzahl / U/min | 70 | | | |

Bewertung der Klebebänder

| **Beispiel:** | **K1** | **K2** | **K2*** | **K3** | **K3*** | **K4** |
|---|---|---|---|---|---|---|
| Klebkraft ungehärtet (Stahl) / N $cm^{-1}$ | 7,8 | 9,6 | 9,5 | 8,5 | 9,4 | 9,8 |
| Bruchbild Kipp-Schertest nach Feucht-Wärme Lagerung* | A | A | A | K | K | K |
| Lagerfähigkeit $Lf_{40}$ | 0,97 | 0,99 | 0,99 | 0,99 | 0,99 | 0,97 |
| Lagerfähigkeit $Lf_{60}$ | 0,82 | 0,95 | 0,91 | 0,94 | 0,92 | 0,90 |
| **Beispiel:** | **K5** | **K6** | **K7** | **K8** | **V1** | **V2** |
| Klebkraft ungehärtet (Stahl) / N $cm^{-1}$ | 10,3 | 9,2 | 8,6 | 9,8 | 9,6 | 11,2 |
| Bruchbild Kipp-Schertest nach Feucht-Wärme Lagerung* | K | A | A | A | A | A |
| Lagerfähigkeit $Lf_{40}$ | 0,96 | 1 | 0,96 | 0,93 | 1 | 0,98 |

(fortgesetzt)

| Beispiel: | K5 | K6 | K7 | K8 | V1 | V2 |
|---|---|---|---|---|---|---|
| Lagerfähigkeit $Lf_{60}$ | 0,91 | 0,97 | 0,87 | 0,43 | 0,26 | n.b. |
| n.b. (nicht bestimmt) bedeutet, dass die Probe innerhalb der Lagerzeit ausgehärtet ist und keine DSC Messung erfolgte<br>* A = adhäsives Versagen an der Glasgrenzfläche<br>K = vollständig kohäsives Versagen<br>Lagerbedingungen: 300 h bei 65 °C und 90 % r.H. | | | | | | |

Alle Beispiele und Gegenbeispiele lassen sich in 30 Minuten bei 145 °C aushärten, sind also ausreichend beschleunigt / schnell. Jedoch zeigen sich starke Unterschiede in der Lagerfähigkeit. K1 bis K8 zeigen nach Lagerung für 10 Tage bei 40 °C noch keine Vorreaktion in der DSC ($Lf_{40}$ > 0,9). Das heißt, die freiwerdende Reaktionswäre entspricht auch nach dieser Lagerung der freiwerdenden Wärmemenge der frischen Klebebänder. Auch die Vergleichsklebebänder V1 und V2 zeigen hier noch keine Unterschiede im Vergleich zu den erfindungsgemäßen Klebebändern K1 bis K8. Nach Lagerung für 10 Tage bei 60 °C sind deutliche Unterschiede erkennbar. V1 ist deutlich vorgehärtet ($Lf_{60}$ < 0,3) und V2 ist fest ausgehärtet, sodass gar keine DSC mehr gemessen wurde. Die erfindungsgemäßen Klebebänder K2 bis K7 hingegen zeigen einen Umsatz von weniger als 15 % auf ($Lf_{60}$ > 0,85). K8 lässt sich nicht ganz so gut bei 60°C lagern. Der verwendete Beschleuniger hat einen Erweichungspunkt von 100°C. Selbst das schnellste System (K1) hat lediglich einen Umsatz von weniger als 20 % ($Lf_{60}$ > 0,8).

Die Lagerfähigkeit der erfindungsgemäßen Klebebänder wird auch in einem kontinuierlichen Herstellungsprozess an einem Extruder zudem nicht negativ beeinflusst. Dies ist anhand der Beispiele K2* und K3* im direkten Vergleich zu K2 und K3 gezeigt. Die Schmelzviskosität bei 95°C (komplexe Viskosität $\eta^*$ gemessen mittels DMA-Temperatursweep mit einer Aufheizgeschwindigkeit von 0,1°C/min) lag bei allen Klebmassen über 100 Pa s.

Im Bezug auf die Kipp-Scherfestigkeit bei Verklebungen auf Glasoberflächen wurde überraschenderweise ein positiver Effekt bei Verwendung von modifizierten Epoxidharzen (K3 bis K5) gefunden. Nach Feucht-Wärme Lagerung bei 65 °C und 90 % r.F. für 300 h ändert sich das Bruchbild von adhäsiven Versagen (K2) durch Austausch des flüssigen Epoxidharzes Epon 828 hin zu vollständig kohäsiven Versagen.

Überraschenderweise hat sich gezeigt, dass sich Epoxy-Amin-Addukte auch thermisch verarbeiten lassen z.B. bei 90 °C, wenn die Viskosität der Klebmasse auch bei dieser hohen Temperatur entgegen der Erwartung hoch ist. Wir spekulieren, dass das unerwünschte vorzeitige Lösen solcher Addukte in Reaktivharzen aufgrund der hohen Viskosität verlangsamt ist bzw. unterbunden wird. Als vorteilhaft haben sich Viskositäten der heißen Klebemasse von größer 10 Pa s bei 90 °C, insbesondere größer 100 Pa s gezeigt. Selbst Klebmassen mit Viskositäten von über 1000 Pa s bei 90 °C konnten sowohl im Extruder, als auch im Laborkneter verarbeitet werden und zeigten sehr bevorzugte Lagerfähigkeiten, was auf die überraschende Wechselwirkung zwischen Schmelzviskosität und Epoxy-Amin-Addukten zurückgeführt wird. Der Fachmann würde sicherlich niedrigere Viskositäten bevorzugen, da in einem solchen System deutlich weniger Scherkräfte wirken, die die Addukt-Partikel in Lösung bringen könnten.

Für die Lagerfähigkeit bei 60 °C hat sich überraschend herausgestellt, dass die Erweichungstemperatur der Beschleuniger mindestens 40 °C höher liegen muss. Somit ergeben Epoxy-Amin-Addukte mit Erweichungspunkten mindestens (größer/gleich) 100 °C bei 60 °C lagerstabile Klebmassen (K1 bis K8). V1 und V2 enthalten Beschleuniger mit Erweichungspunkten deutlich über 60 °C, jedoch unter 100 °C. Diese Systeme sind bei 60 °C nicht lagerstabil. Die Temperaturgrenze wird bei Vergleich von K7 mit K8 noch deutlicher. So hat der in K7 verwendete Beschleuniger Ajicure PN-40 einen Erweichungspunkt von 107 °C und der in K8 verwendete Beschleuniger Technicure LC-80 einen Erweichungspunkt von 100 °C. Zwar ist auch bei K8 eine gewisse Lagerfähigkeit bei 60 °C gegeben, jedoch ist der Unterschied zu K7 signifikant.

## Patentansprüche

1. Klebeband umfassend zumindest eine Schicht einer haftklebrigen Klebemasse,

wobei die Klebemasse eine polymere Filmbildner-Matrix sowie eine härtbare Zusammensetzung umfasst, wobei die härtbare Zusammensetzung ein oder mehrere Epoxidharze sowie zumindest ein Härtungsreagenz für Epoxidharze umfasst,

**dadurch gekennzeichnet, dass**

das Härtungsreagenz zumindest ein Epoxy-Amin-Addukt umfasst, nämlich das Reaktionsprodukt aus zumindest einer Verbindung, die zumindest eine cyclische Ethergruppe im Molekül aufweist, und zumindest einer Aminverbindung; und,
wenn das bzw. die Epoxy-Amin-Addukt(e) als Beschleuniger in Kombination mit Nicht-Epoxy-Amin-Addukten als Härter eingesetzt werden, die Gesamtmenge der Epoxy-Amin-Addukte im Bereich von 1 bis 10 Gew.-Teilen, bezogen auf 100 Gew.-Teile des/der zu härtenden Epoxidharze(s) liegt.

**2.** Klebeband nach Anspruch 1, **dadurch gekennzeichnet, dass** die zumindest eine cyclische Ethergruppe aufweisende Verbindung eine polyfunktionelle Epoxidverbindung ist.

**3.** Klebeband nach einem der vorangehenden Ansprüche, **dadurch gekennzeichnet, dass** die Aminverbindung eine Verbindung umfassend zumindest eine tertiäre Aminogruppe ist, insbesondere eine solche Verbindung umfassend zumindest eine tertiäre Aminogruppe sowie zusätzlich mindestens eine weitere Gruppe, gewählt aus der Liste bestehend aus - OH (Hydroxygruppe), -NH (sekundäre Aminogruppe), $-NH_2$ (primäre Aminogruppe), -SH (Sulfanyl- / Mercaptogruppe), -COOH (Carboxygruppe), $-CONHNH_2$ (Säurehydrazidgruppe).

**4.** Klebeband nach einem der vorangehenden Ansprüche, **dadurch gekennzeichnet, dass** als weiteres Ausgangsmaterial bei der Herstellung des Epoxy-Amin-Addukts eine stabilisierende Komponente zugesetzt wird, insbesondere gewählt als Säureanhydrid oder als eine oder mehrere aktive Wasserstoffverbindungen mit zwei oder mehr aktiven Wasserstoffen pro Molekül.

**5.** Klebeband nach Anspruch 4, **dadurch gekennzeichnet, dass** die stabilisierende Komponente in Gegenwart von 0,05 bis 5,0 Mol-Äquivalent Wasser pro Mol-Äquivalent an Epoxygruppen in der die zumindest eine cyclische Ethergruppe aufweisende Verbindung des Epoxy-Amin-Addukts eingesetzt wird.

**6.** Klebeband nach einem der vorangehenden Ansprüche, **dadurch gekennzeichnet, dass** das Epoxy-Amin-Addukt in partikulärer Form eingesetzt wird.

**7.** Klebebandnach einem der Ansprüche 2 bis 6, **dadurch gekennzeichnet, dass** die polyfunktionelle Epoxidverbindung ein Polyglycidylether, ein Polyglycidyletherester, ein Polyglycidylester, ein Glycidylamin ein epoxidierter Novolak oder ein epoxidiertes Polyolefin ist.

**8.** Klebeband nach einem der vorangehenden Ansprüche, **dadurch gekennzeichnet, dass** die Aminverbindung einer der folgenden allgemeinen Formeln (I), (IIa), (IIb) oder (III) entspricht:

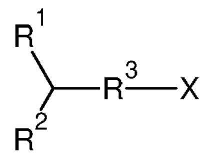
(I)

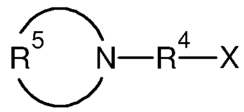
(IIa)

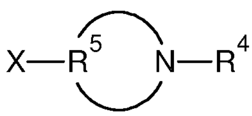
(IIb)

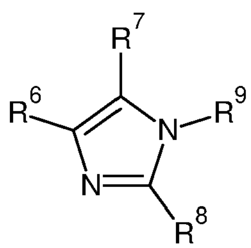
(III)

wobei

X gleich -OH, $-NH_2$, -NH oder -SH ist,
$R_1$ und $R_2$ unabhängig voneinander gewählt sind aus der Gruppe aus

- Wasserstoffatomen,
- $C_1$- bis $C_{20}$-Alkylgruppen,
- $C_2$- bis $C_{20}$-Alkenylgruppen,
- unsubstituierten aromatischen Kohlenwasserstoffgruppen
- substituierten aromatischen Kohlenwasserstoffgruppen, insbesondere substituiert mit Sauerstoff, Halogen, -OH, $-NH_2$, -NH und/oder -SH,

$R_3$ eine gesättigte oder ungesättigte, unverzweigte oder verzweigte Kohlenwasserstoffkette mit 1 bis 20 C-Atomen ist,
$R_4$ eine gesättigte oder ungesättigte, unverzweigte oder verzweigte Kohlenwasserstoffkette mit einem bis 20 C-Atomen ist,
$R_5$ ein cylischer, zweifach an das Stickstoffatom gebundener, aliphatischer oder aromatischer; gesättigter oder ungesättigter; unsubstituierter oder substituierter Kohlenwasserstoffrest mit 2 bis 20 C-Atomen, die teilweise durch Heteroatome substituiert sein können, ist,
$R_6$, $R_7$, $R_8$ und $R_9$ unabhängig voneinander gewählt sind aus der Gruppe aus

- Wasserstoffatomen,
- $C_1$- bis $C_{20}$-Alkylgruppen,
- $C_2$- bis $C_{20}$-Alkenylgruppen,
- unsubstituierten aromatischen Kohlenwasserstoffgruppen
- substituierten aromatischen Kohlenwasserstoffgruppen, insbesondere substituiert mit Sauerstoff, Halogen, -OH, $-NH_2$, -NH und/oder -SH,
- -OH, $-NH_2$, -NH und/oder -SH,

mit der Maßgabe, dass
$R_9$ = H oder dass mindestens eine der Gruppen $R_6$, $R_7$ und/oder $R_8$ eine der Gruppen - OH, $-NH_2$, -NH oder -SH ist.

**9.** Klebeband nach einem der vorangehenden Ansprüche, **dadurch gekennzeichnet, dass** die Aminverbindung gewählt ist aus der folgenden Auflistung aus 2-Dimethylaminethanol, 1-Methyl-2-Dimethylaminoethanol, 1-Phenoxymethyl-2-dimethylaminoethanol, 2-Diethylaminoethanol, 1-Butoxymethyl-2-Dimethylaminoethanol, 1-(2-Hydroxy-3-Phenoxypropyl)-2-Methylimidazol, 1-(2-Hydroxy-3-Phenoxypropyl)-2-Ethyl-4-Methyl-imidazol, 1-(2-Hydroxy-3-Butoxypropyl)-2-Methylimidazol, 1-(2-Hydroxy-3-Butoxypropyl)-2-Ethyl-4-Methylimidazol, 1-(2-Hydroxy-3-Phenoxypropyl)-2-Phenylimidazolin, 1-(2-Hydroxy-3-Butoxypropyl)-2-Methylimidazolin, 2-(Dimethylaminomethyl)phenol, 2,4,6-Tris(dimethyl-aminomethyl)phenol, N-β-Hydroxyethylmorpholin, 2-Dimethylaminoethylamin, 3-Dimethyl-amino-n-Propylamin, 2-Diethylaminoethylamin, 3-Diethylamino-n-Propylamin, N-Methyl-piperazin, Imidazol, 2-Methylimidazol, 2-Ethylimidazol, 2-Ethyl-4-Methylimidazol, 2-Iso-propylimidazol, 2-Undecylimidazol, 2-Octadecylimidazol, 2-Phenylimidazol, 2-Phenyl-4- Methylimidazol, 2-Dimethylaminoethanethiol, Methimazol, 2-Mercaptobenzoimidazol, 2-Mercaptobenzothiazol.

**10.** Klebeband nach einem der vorangehenden Ansprüche, **dadurch gekennzeichnet, dass** als Epoxidharz ein elastomermodifiziertes, insbesondere nitrilkautschukmodifiziertes Epoxidharz eingesetzt.

**11.** Klebeband nach einem der vorangehenden Ansprüche, **dadurch gekennzeichnet, dass** als Epoxidharz ein fettsäuremodifiziertes Epoxidharz eingesetzt wird.

**12.** Klebeband nach einem der vorangehenden Ansprüche, **dadurch gekennzeichnet, dass** das Härtungsreagenz einen oder mehrere sich von dem Epoxid-Amin-Addukt unterscheidende Verbindungen als Härter oder Beschleuniger für die Härtungsreaktion des Epoxidharzes umfasst.

**13.** Klebeband nach Anspruch 12, **dadurch gekennzeichnet, dass**
die sich von dem Epoxid-Amin-Addukt unterscheidenden Härter beziehungsweise Beschleuniger gewählt sind aus der Liste aus

- Dicyandiamid
- Anhydriden
- geblockten oder ungeblockten Imidazolen
- Hydraziden
- Reaktionsprodukten aus Disäuren und multifunktionellen Aminen, wie insbesondere Reaktionsprodukten aus Phthalsäure und Diethylentriamin.

**14.** Klebeband nach einem der vorangehenden Ansprüche, **dadurch gekennzeichnet, dass** als polymer Filmbildner-Matrix ganz oder teilweise ein oder mehrere thermoplastische Polyurethane oder ein oder mehrere nicht-thermoplastische Elastomere eingesetzt werden.

## Claims

**1.** Adhesive tape comprising at least one layer of a pressure-sensitive adhesive,

where the adhesive comprises a polymeric film-former matrix and also a curable composition,
where the curable composition comprises one or more epoxy resins and also at least one curing reagent for epoxy resins,
**characterized in that**
the curing reagent comprises at least one epoxy-amine adduct, specifically the reaction product of at least one compound which has at least one cyclic ether group in the molecule, and at least one amine compound; and, if the one or more epoxy-amine adducts are used as accelerators in combination with non-epoxy-amine adducts as curing agents, the total amount of the epoxy-amine adducts is in the range from 1 to 10 parts by weight, based on 100 parts by weight of the one or more epoxy resins to be cured.

**2.** Adhesive tape according to Claim 1, **characterized in that**
the compound having at least one cyclic ether group is a polyfunctional epoxide compound.

**3.** Adhesive tape according to either of the preceding claims, **characterized in that**
the amine compound is a compound comprising at least one tertiary amino group, more particularly a compound of this kind comprising at least one tertiary amino group and also, additionally, at least one further group selected from the list consisting of -OH (hydroxyl group), -NH (secondary amino group), $-NH_2$ (primary amino group), -SH (sulfanyl/mercapto group), -COOH (carboxyl group), $-CONHNH_2$ (acid hydrazide group).

**4.** Adhesive tape according to any of the preceding claims, **characterized in that**
as a further starting material in the preparation of the epoxy-amine adduct, a stabilizing component is added, more particularly selected as acid anhydride or as one or more active hydrogen compounds having two or more active hydrogens per molecule.

**5.** Adhesive tape according to Claim 4, **characterized in that** the stabilizing component is used in the presence of 0.05 to 5.0 mole-equivalent of water per mole-equivalent of epoxy groups in the compound having the at least one cyclic ether group in the epoxy-amine adduct.

**6.** Adhesive tape according to any of the preceding claims, **characterized in that**
the epoxy-amine adduct is used in particulate form.

**7.** Adhesive tape according to any of Claims 2 to 6, **characterized in that**
the polyfunctional epoxide compound is a polyglycidyl ether, a polyglycidyl ether ester, a polyglydicyl ester, a glycidylamine, an epoxidized novolac or an epoxidized polyolefin.

**8.** Adhesive tape according to any of the preceding claims, **characterized in that**
the amine compound corresponds to one of the following general formulae (I), (IIa), (IIb) or (III):

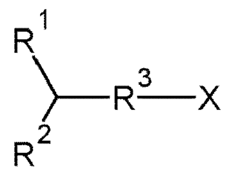

(I)

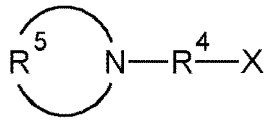

(IIa)

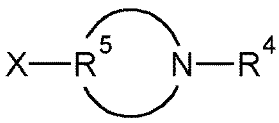

(IIb)

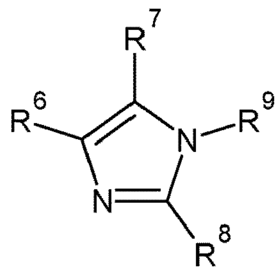

(III)

where

X is -OH, $-NH_2$, -NH or -SH,
$R_1$ and $R_2$ independently of one another are selected from the group composed of

- hydrogen atoms,
- $C_1$ to $C_{20}$ alkyl groups,
- $C_2$ to $C_{20}$ alkenyl groups,
- unsubstituted aromatic hydrocarbon groups,
- substituted aromatic hydrocarbon groups, more particularly substituted by oxygen, halogen, -OH, $-NH_2$, -NH and/or -SH,

$R_3$ is a saturated or unsaturated, unbranched or branched hydrocarbon chain having 1 to 20 C atoms,
$R_4$ is a saturated or unsaturated, unbranched or branched hydrocarbon chain having one to 20 C atoms,
$R_5$ is a cyclic, aliphatic or aromatic, saturated or unsaturated, unsubstituted or substituted hydrocarbon radical which has 2 to 20 C atoms, has twofold bonding to the nitrogen atom and may in part be substituted by heteroatoms,
$R_6$, $R_7$, $R_8$ and $R_9$ independently of one another are selected from the group composed of

- hydrogen atoms,
- $C_1$ to $C_{20}$ alkyl groups,
- $C_2$ to $C_{20}$ alkenyl groups,
- unsubstituted aromatic hydrocarbon groups,
- substituted aromatic hydrocarbon groups, more particularly substituted by oxygen, halogen, -OH, $-NH_2$, -NH and/or -SH,
- -OH, $-NH_2$, -NH and/or -SH,

with the proviso that
$R_9$ is H or that at least one of the groups $R_6$, $R_7$ and/or
$R_8$ is one of the groups -OH, $-NH_2$, -NH or -SH.

**9.** Adhesive tape according to any of the preceding claims, **characterized in that** the amine compound is selected from the following listing composed of 2-dimethylaminoethanol, 1-methyl-2-dimethylaminoethanol, 1-phenoxymethyl-2-dimethylaminoethanol, 2-ethylaminoethanol, 1-butoxymethyl-2-dimethylaminoethanol, 1-(2-hydroxy-3-phenoxypropyl)-2-methylimidazole, 1-(2-hydroxy-3-phenoxypropyl)-2-ethyl-4-methylimidazole, 1-(2-hydroxy-3-butoxypropyl)-2-methylimidazole, 1-(2-hydroxy-3-butoxypropyl)-2-ethyl-4-methylimidazole, 1-(2-hydroxy-3-phenoxypropyl)-2-phenylimidazoline, 1-(2-hydroxy-3-butoxypropyl)-2-methylimidazoline, 2-(dimethylaminomethyl)phenol, 2,4,6-tris(dimethylaminomethyl)phenol, N-β-hydroxy-ethylmorpholine, 2-dimethylaminoethylamine, 3-dimethyl-amino-n-propylamine, 2-diethylaminoethylamine, 3-diethylamino-n-propylamine, N-methylpiperazine, imidazole, 2-methylimidazole, 2-ethylimidazole, 2-ethyl-4-methylimidazole, 2-isopropylimidazole, 2-undecyl-imidazole, 2-octadecylimidazole, 2-phenylimidazole, 2-phenyl-4-methylimidazole, 2-dimethylaminoethanethiol, methimazole, 2-mercaptobenzoimidazole, 2-mercaptobenzothiazole.

**10.** Adhesive tape according to any of the preceding claims, **characterized in that** the epoxy resin used comprises an elastomer-modified, more particularly nitrile rubber-modified epoxy resin.

**11.** Adhesive tape according to any of the preceding claims, **characterized in that** the epoxy resin used comprises a fatty acid-modified epoxy resin.

**12.** Adhesive tape according to any of the preceding claims, **characterized in that** the curing reagent comprises one or more compounds different from the epoxide-amine adduct as curing agents or accelerators for the curing reaction of the epoxy resin.

**13.** Adhesive tape according to Claim 12, **characterized in that** the curing agents or accelerators different from the epoxide-amine adduct are selected from the list composed of

- dicyandiamide
- anhydrides
- blocked or unblocked imidazoles
- hydrazides
- reaction products of diacids and polyfunctional amines, such as more particularly reaction products of phthalic acid and diethylenetriamine.

**14.** Adhesive tape according to any of the preceding claims, **characterized in that** one or more thermoplastic polyurethanes or one or more non-thermoplastic elastomers are used wholly or partly as polymeric film-former matrix.

**Revendications**

**1.** Ruban adhésif comprenant au moins une couche d'une masse adhésive sensible à la pression,

la masse adhésive comprenant une matrice filmogène polymère ainsi qu'une composition durcissable,
la composition durcissable comprenant une ou plusieurs résines époxydes ainsi qu'au moins un réactif de durcissement de résines époxydes,
**caractérisé en ce que**
le réactif de durcissement comprend au moins un produit d'addition époxy-amine, plus précisément le produit de la réaction d'au moins un composé qui comprend au moins un groupe éther cyclique dans sa molécule et d'au moins un composé amine ; et, lorsque le ou les produits d'addition époxy-amine sont utilisés comme accélérants en combinaison avec des produits qui ne sont pas des produits d'addition époxy-amine en tant que durcisseurs, la quantité totale des produits d'addition époxy-amine est comprise dans la plage de 1 à 10 parties en poids pour 100 parties en poids de la ou des résines époxydes à durcir.

**2.** Ruban adhésif selon la revendication 1, **caractérisé en ce que** le composé comprenant au moins un groupe éther cyclique est un composé époxyde polyfonctionnel.

**3.** Ruban adhésif selon l'une des revendications précédentes, **caractérisé en ce que** le composé amine est un composé comprenant au moins un groupe amino tertiaire, en particulier un composé de ce type comprenant au moins un groupe amino tertiaire ainsi qu'en plus au moins un autre groupe, choisi dans la liste consistant en -OH (groupe hydroxy), -NH (groupe amino secondaire), $-NH_2$ (groupe amino primaire), -SH (groupe sulfanyle / mercapto), -COOH

(groupe carboxy), $-CONHNH_2$ (groupe hydrazide d'acide).

**4.** Ruban adhésif selon l'une des revendications précédentes, **caractérisé en ce qu'**on ajoute en tant qu'autre matière de départ lors de la fabrication du produit d'addition époxy-amine un composant stabilisant, choisi en particulier sous forme d'anhydride d'acide ou sous forme d'un ou plusieurs composés d'hydrogène actif ayant deux atomes d'hydrogène actif ou plus par molécule.

**5.** Ruban adhésif selon la revendication 4, **caractérisé en ce que** le composant stabilisant est utilisé en présence de 0,05 à 5,0 équivalents en moles d'eau par équivalent en moles de groupes époxy dans le composé, comprenant au moins un groupe éther cyclique, du produit d'addition époxy-amine.

**6.** Ruban adhésif selon l'une des revendications précédentes, **caractérisé en ce que** le produit d'addition époxy-amine est utilisé sous forme particulaire.

**7.** Ruban adhésif selon l'une des revendications 2 à 6, **caractérisé en ce que** le composé époxyde fonctionnel est un polyglycidyléther, un polyglycidylétherester, un polyglycidylester, une glycidylamine, une novolaque époxydée ou une polyoléfine époxydée.

**8.** Ruban adhésif selon l'une des revendications précédentes, **caractérisé en ce que** le composé amine correspond à l'une des formules générales (I), (IIa), (IIb) ou (III) ci-après :

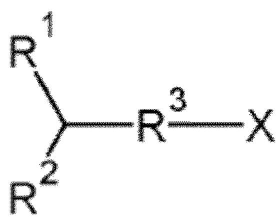

(I)

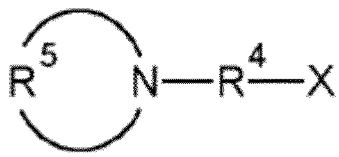

(IIa)

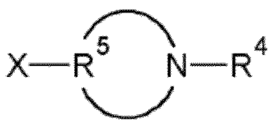

(IIb)

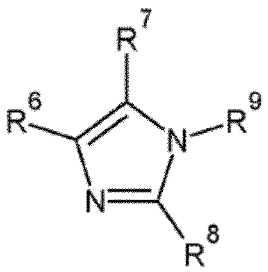

(III)

dans lesquelles

X représente -OH, $-NH_2$, -NH ou -SH,
$R_1$ et $R_2$ sont indépendamment l'un de l'autre choisis dans le groupe consistant en

- les atomes d'hydrogène,
- les groupes alkyle en $C_1$ à $C_{20}$,
- les groupes alcényle en $C_2$ à $C_{20}$,

- les groupes hydrocarbonés aromatiques non substitués,
- les groupes hydrocarbonés aromatiques substitués, en particulier substitués par un oxygène, un halogène, -OH, $-NH_2$, -NH et/ou -SH,

$R_8$ représente une chaîne hydrocarbonée saturée ou insaturée, non ramifiée ou ramifiée, ayant 1 à 20 atomes de carbone,
$R_4$ représente une chaîne hydrocarbonée saturée ou insaturée, non ramifiée ou ramifiée, ayant 1 à 20 atomes de carbone,
$R_5$ représente un radical hydrocarboné cyclique, lié deux fois à l'atome d'azote, aliphatique ou aromatique, saturé ou insaturé, non substitué ou substitué, ayant 2 à 20 atomes de carbone, qui peuvent être en partie substitués par des hétéroatomes,
$R_6$, $R_7$, $R_8$ et $R_9$ sont indépendamment les uns des autres choisis dans le groupe consistant en

- les atomes d'hydrogène,
- les groupes alkyle en $C_1$ à $C_{20}$,
- les groupes alcényle en $C_2$ à $C_{20}$,
- les groupes hydrocarbonés aromatiques non substitués,
- les groupes hydrocarbonés aromatiques substitués, en particulier substitués par un oxygène, un halogène, - OH, $-NH_2$, -NH et/ou -SH,
- -OH, $-NH_2$, -NH et/ou -SH,

à la condition que $R_9$ représente H ou qu'au moins l'un des groupes $R_6$, $R_7$ et/ou $R_8$ représentent l'un des groupes -OH, $-NH_2$, -NH ou -SH.

**9.** Ruban adhésif selon l'une des revendications précédentes, **caractérisé en ce que** le composé amine est choisi dans la liste suivante : 2-diméthylaminoéthanol, 1-méthyl-2-diméthylaminoéthanol, 1-phénoxyméthyl-2-diméthylaminoéthanol, 2-diéthylaminoéthanol, 1-butoxyméthyl-2-diméthylaminoéthanol, 1-(2-hydroxy-3-phénoxypropyl)-2-méthylimidazole, 1-(2-hydroxy-3-phénoxypropyl)-2-éthyl-4-méthyl-imidazole, 1-(2-hydroxy-3-butoxypropyl)-2-méthylimidazole, 1-(2-hydroxy-3-butoxypropyl)-2-éthyl-4-méthylimidazole, 1-(2-hydroxy-3-phénoxypropyl)-2-phénylimidazoline, 1-(2-hydroxy-3-butoxypropyl)-2-méthylimidazoline, 2-(diméthylaminométhyl)phénol, 2,4,6-Tris(diméthyl-aminométhyl)phénol, N-β-hydroxyéthylmorpholine, 2-diméthylaminoéthylamine, 3-diméthyl-amino-n-propylamine, 2-diéthylaminoéthylamine, 3-diéthylamino-n-propylamine, N-méthyl-pipérazine, imidazole, 2-méthylimidazole, 2-éthylimidazole, 2-éthyl-4-méthylimidazole, 2-iso-propylimidazole, 2-undécylimidazole, 2-octadécylimidazole, 2-phénylimidazole, 2-phényl-4-méthylimidazole, 2-diméthylaminoéthanethiol, méthimazole, 2-mercaptobenzoimidazole, 2-mercaptobenzothiazol.

**10.** Ruban adhésif selon l'une des revendications précédentes, **caractérisé en ce qu'**on utilise comme résine époxyde une résine époxyde modifiée par un élastomère, en particulier modifiée par un caoutchouc nitrile.

**11.** Ruban adhésif selon l'une des revendications précédentes, **caractérisé en ce qu'**on utilise comme résine époxyde une résine époxyde modifiée par un acide gras.

**12.** Ruban adhésif selon l'une des revendications précédentes, **caractérisé en ce que** le réactif de durcissement comprend un ou plusieurs composés différents du produit d'addition époxyde-amine en tant que durcisseur ou accélérateur pour la réaction de durcissement de la résine époxyde.

**13.** Ruban adhésif selon la revendication 12, **caractérisé en ce que** les durcisseurs ou accélérateurs différents du produit d'addition époxyde-amine sont choisis dans la liste suivante

- dicyanodiamide
- anhydrides
- imidazoles bloqués ou non bloqués
- hydrazides
- produits de la réaction de diacides et d'amines multifonctionnelles, tels en particulier que les produits de la réaction d'acide phtalique et de diéthylènetriamine.

**14.** Ruban adhésif selon l'une des revendications précédentes, **caractérisé en ce qu'**on utilise comme matrice filmogène polymère, en totalité ou en partie, un ou plusieurs polyuréthanes thermoplastiques ou un ou plusieurs élastomères

non thermoplastiques.

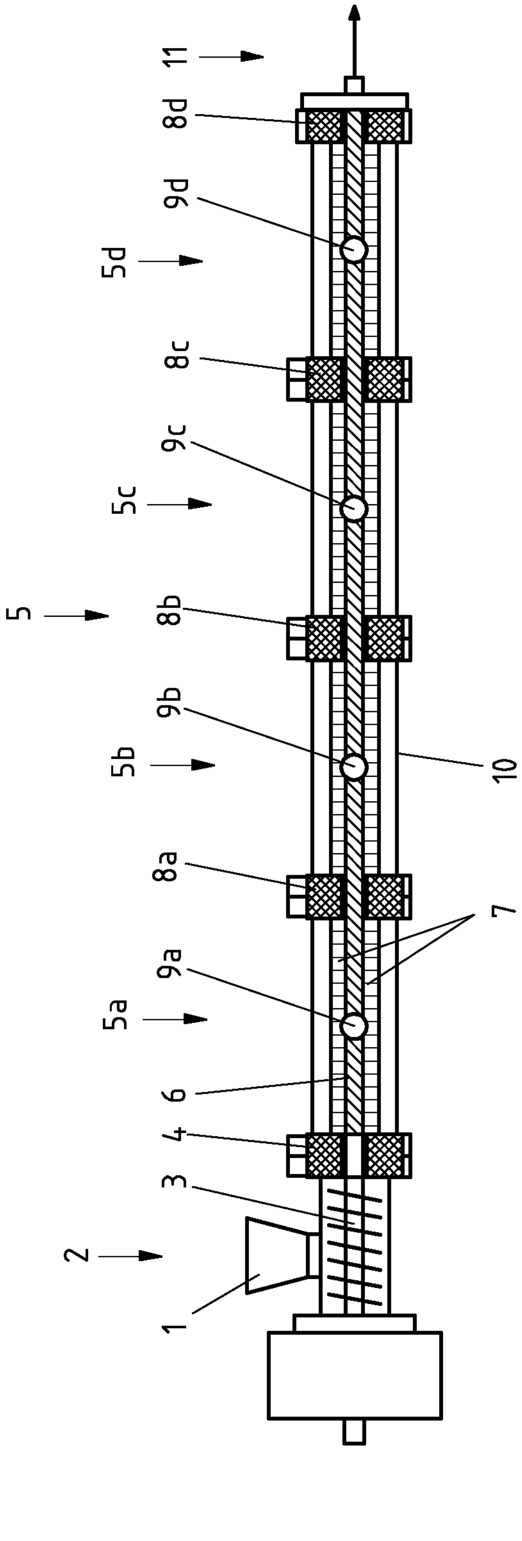


FIG.1

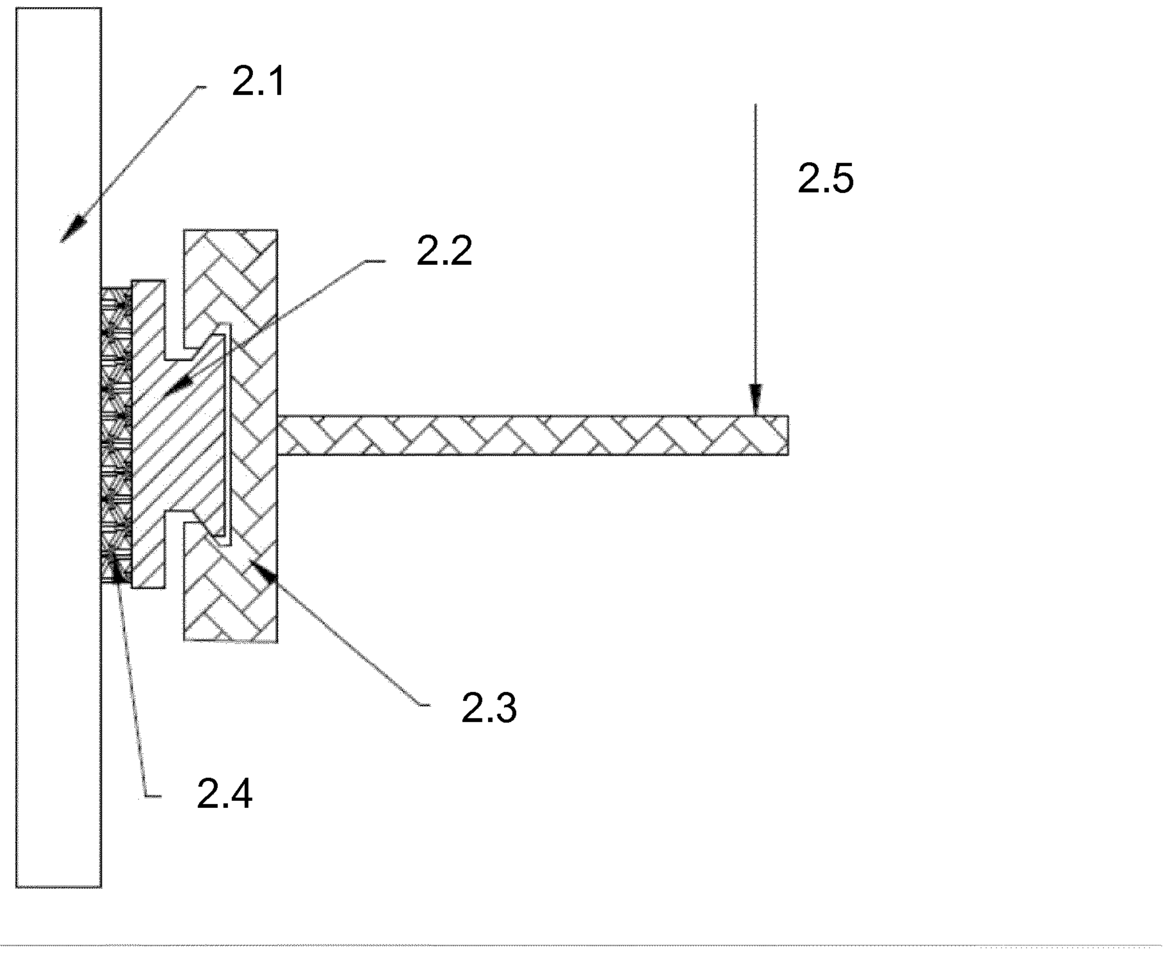


Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102004031188 A1
- US 6294270 B
- US 6423367 B
- US 6489042 B
- DE 102011105209 A1
- EP 1028151 B1
- EP 0386909 A1
- EP 0927737 A1
- JP 1991282820 A
- US 4859533 A
- DE 102008053520 A1
- WO 200909814 A1
- DE 102015217860 A
- EP 1114834 A
- US 8835574 A

### In der Beschreibung aufgeführte Nicht-Patentliteratur

- **DARÜBER.** Rubber-Modified Epoxides. *J. Appl. Polym. Sci.,* vol. 41, 467-1990